# EUROPÄISCHE PATENTSCHRIFT

(11) **EP 2 338 773 B1**
(45) Veröffentlichungstag und Bekanntmachung des Hinweises auf die Patenterteilung: **27.11.2013**
(21) Anmeldenummer: 10196356.9
(22) Anmeldetag: 21.12.2010
(51) Int. Cl.: B62K 3/00, B62K 15/00

(54) **Klappbarer Roller**
Foldable scooter
Trottinette pliable

(30) Priorität: 22.12.2009 DE 102009055222
(43) Veröffentlichungstag der Anmeldung: 29.06.2011
(73) Patentinhaber: Rief, Stephan, 6334 Schwoich (AT)
(72) Erfinder: Hofreiter, Armin, 6334 Schwoich (AT); Rief, Stephan, 6334 Schwoich (AT)
(74) Vertreter: Dilg, Haeusler, Schindelmann Patentanwaltsgesellschaft mbH

(56) Entgegenhaltungen:
- EP-A1- 1 950 126
- DE-A1- 4 112 807
- DE-A1-102009 018 162

## Beschreibung

Diese Patentanmeldung beansprucht die Priorität der deutschen Patentanmeldung 10 2009 055 222.7, eingereicht am 22. Dezember 2009.

Die Erfindung betrifft einen Roller mit einem Trittbrett.

Darüber hinaus betrifft die Erfindung einen faltbaren Roller.

WO 2006/032507 offenbart einen Roller mit einem Rahmen, mindestens einem Vorderrad, mindestens einem Hinterrad und mit einer Lenkeinrichtung, mit der mindestens ein Vorderrad lenkbar ist, wobei der Roller auf der linken und/oder rechten Seite der Verbindungsachse zwischen den Vorder- und Hinterrädern (Längsachse des Rollers) zwischen dem Radmittelpunkt eines Vorderrades und dem hinteren Ende eines Hinterrades eine seitlich ausklappbare Trittflächeneinheit aufweist, die nicht um 360° um eine senkrecht zur Längsachse des Rollers stehende Querachse des Rahmens gedreht werden kann.

FR 526 824 offenbart einen Roller mit Trittbrettern, die jeweils ein bodenseitiges Rad aufweisen.

DE 298 15 162 U1 offenbart einen Tretroller, der zusammengelegt werden kann.

DE 10 2004 045 971 A1 offenbart einen Roller mit einem Rahmen, mindestens einem Vorderrad, mindestens einem Hinterrad und mit einer Lenkeinrichtung, mit der mindestens ein Vorderrad lenkbar ist, wobei der Roller auf der linken und/oder rechten Seite der Verbindungsachse zwischen den Vorder- und Hinterrädern (Längsachse des Rollers) zwischen dem Radmittelpunkt eines Vorderrades und dem hinteren Ende eines Hinterrades eine seitlich ausklappbare Trittflächeneinheit aufweist, die nicht um 360° um eine senkrecht zur Längsachse des Rollers stehende Querachse des Rahmens gedreht werden kann.

DE 199 18 180 A1 offenbart ein klappbares Zweiradfahrzeug, umfassend ein Vorderrad, ein Hinterrad einen Rahmen, eine Lenkeinheit, eine Sitzeinheit und Radführungen, welche die Räder mit dem Rahmen verbinden. Als Mittel zum Anklappen der Radführung an den Rahmen werden gerade die Drehgelenke genutzt, die zum Einfedern der Radführungen dienen. Im zusammengeklappten Zustand erfolgt die äußerste seitliche Begrenzung des klappbaren Zweiradfahrzeuges auf der einen Seite durch die Außenseite des Hinterrades und auf der anderen Seite durch die Außenseite des Vorderrades, wobei beide Räder nur auf der einen Seite an der Radführung befestigt sind und die Radführungen im zusammengeklappten Zustand auf der Innenseite liegen. Im zusammengeklappten Zustand liegen die Lenkeinheit und Sitzeinheit und der Rahmen im Bereich zwischen den Radaußenseiten. In der Seitenansicht des zusammengeklappten Zweiradfahrzeuges stehen im wesentlichen keine Antriebselemente aus den Radumrissen hervor.

DE 197 24 360 A1 offenbart einen zweirädrigen muskelkraftbetriebenen Roller mit einem Rahmen und einem darauf befestigten Standbrett, wobei am Rahmen zwei Steuerrohre mit je einer schwenkbaren Gabel für das Vorder- und Hinterrad vorgesehen sind, wobei die Steuerrohre für die schwenkbaren Gabeln und somit deren Schwenkachsen in einem spitzen Neigungswinkel von jeweils mindestens 5° zur Vertikalen und gegeneinander geneigt sind. Ein Lenker ist zur Betätigung der Gabel für das Vorderrad vorgesehen, wobei der Lenkeinschlag des Vorderrades über eine Verbindungsanordnung einen Lenkeinschlag des Hinterrades bewirkt.

US 2005/0205326 A1 offenbart einen motorbetriebenen Roller. DE 200 19 039 U1 offenbart einen Tretroller mit einem einzigen Trittbrett.

Es ist eine Aufgabe der vorliegenden Erfindung, einen benutzerfreundlichen und flexibel betreibbaren Roller bereitzustellen.

Diese Aufgabe wird durch einen Roller mit den Merkmalen gemäß Anspruch 1 gelöst.

Gemäß einem Aspekt der vorliegenden Erfindung ist ein Roller zum rollenden Fortbewegen eines Benutzers geschaffen. Der Roller weist (mindestens) zwei Räder (insbesondere zwei, drei oder mehr Räder) auf, die entlang einer Längsachse (die einer Bewegungsrichtung des Rollers entsprechen kann) des Rollers in Längsrichtung hintereinander angeordnet sind. Der Roller enthält ein Trittbrett, das zum Abstützen zweier Füße des Benutzers eingerichtet ist, wobei das Trittbrett (mindestens) einen ersten Trittbrettbereich und einen zweiten Trittbrettbereich (optional auch einen dritten Trittbrettbereich bzw. sogar einen vierten Trittbrettbereich) aufweist.

Der erste Trittbrettbereich und der zweite Trittbrettbereich sind optional auf gegenüberliegenden Seiten der Längsachse des Rollers angeordnet und in der Längsrichtung des Rollers gegeneinander versetzt. Jedes der im Folgenden erläuterten Ausführungsbeispiele der Erfindung kann auf dieses Merkmal verzichten. Anders ausgedrückt können der erste Trittbrettbereich und der zweite Trittbrettbereich auch auf den gleichen Seiten der Längsachse des Rollers angeordnet sein und/oder in der Längsrichtung des Rollers versetzungsfrei nebeneinander angeordnet sein. Es ist auch möglich, dass der erste Trittbrettbereich und der zweite Trittbrettbereich einstückig und somit ohne Versetzung auf gegenüberliegenden Seiten der Längsachse des Rollers angeordnet sind. Insbesondere die Ausgestaltungen betreffend die Dämpfungseinrichtung, den Klappmechanismus, den Verrutschschutz, den Rahmenschutz und den Schutz gegen einen Untergrund sind auch ohne die versetzte Anordnung der Trittbrettbereiche erreichbar.

Gemäß einem zweiten Aspekt der vorliegenden Erfindung ist ein faltbarer Roller zum rollenden Fortbewegen eines Benutzers geschaffen. Der Roller weist mindestens zwei Räder (insbesondere zwei, drei oder mehr Räder) auf, die im entfalteten Zustand des Rollers entlang einer Längsachse des Rollers hintereinander angeordnet sind. Der Roller enthält einen Rahmen, an dem die zwei Räder aufgehängt (bzw. montiert) sind, wobei der Rahmen mehrere (insbesondere mindestens zwei oder mindestens drei) gegeneinander faltbare Rahmenabschnitte aufweist. Die Rahmenabschnitte sind gegeneinander zum Zusammenfalten (oder zum Entfalten) des Rollers entlang mehrerer Faltachsen (oder Faltrichtungen) faltbar.

Zwei der Faltachsen können optional zueinander windschief verlaufen (das heißt zueinander nicht parallel sind und sich nicht schneiden). Jedes der im Folgenden erläuterten Ausführungsbeispiele der Erfindung kann auf dieses Merkmal verzichten. Anders ausgedrückt können Faltachsen bei dem Roller auch nicht-windschief zueinander ausgebildet sein, zum Beispiel parallel zueinander verlaufen.

Unter dem Begriff "Längsachse" wird im Rahmen dieser Anmeldung insbesondere eine Achse verstanden, die der Fahrtrichtung oder im Wesentlichen der Fahrtrichtung des Rollers entspricht. Als Längsachse kann auch die Verbindungsachse zwischen den Aufhängungen des Vorderrads und des Hinterrads verstanden werden. Somit kann bei einer Fahrt in der Horizontalen die Längsachse horizontal angeordnet sein oder zumindest eine horizontale Komponente aufweisen, die größer, vorzugsweise erheblich größer, als eine vertikale Komponente ist. Die horizontale Komponente kann größer als 80%, insbesondere größer als 90%, der vertikalen Komponente sein. Auch eine Haupterstreckungsrichtung des Rahmens kann als Längsachse bezeichnet werden. Die Längsachse liegt üblicherweise in einer Symmetrieebene des Rollers, d.h. in einer Ebene, die im Wesentlichen als Spiegelebene von Komponenten auf einer linken Seite des Rollers zu Komponenten auf einer rechten Seite des Rollers dient. Allerdings können einzelne Komponenten des Rollers (Einarmgabel, Einarmschwinge, Trittbrettbereiche, etc.) asymmetrisch, insbesondere nur auf einer Seite des Rollers, vorgesehen sein oder auf beiden Seiten an unterschiedlicher Stelle angeordnet sein.

Gemäß dem ersten Aspekt der Erfindung ist ein Roller geschaffen, bei dem zwei Trittbrettbereiche zum Abstützen zweier Füße des Benutzers gegeneinander in Längsrichtung versetzt angeordnet sind, was zu einer verbesserten Standfestigkeit des Benutzers auf dem Trittbrett führt. Die versetzte Anordnung kann in Längsrichtung überlappend oder überlappungsfrei sein. Durch die versetzte Anordnung kann anschaulich eine Ausgleichslinie, entlang welcher der Benutzer herkömmlich sein Gewicht ausbalancieren kann, durch eine zweidimensionale Ausgleichsebene ersetzt werden, so dass mit höherer Zuverlässigkeit ein Gewichtsausgleich durchgeführt werden kann. Somit kann der Roller betriebssicher eingesetzt werden, zum Beispiel bei einem antriebsfreien Betrieb entlang eines Gefälles. Dadurch kann ein stabilerer Stand erreicht werden.

Gemäß dem zweiten Aspekt der Erfindung ist ein Roller faltbar vorgesehen, wobei zwei Faltachsen, das heißt zwei Achsen entlang welcher ein Ein- oder Ausfalten durchgeführt wird, zueinander windschief angeordnet sind. Unter einer windschiefen Anordnung wird eine nichtparallele (insbesondere auch eine nicht senkrechte) Relativanordnung verstanden, wobei die zwei Faltachsen ferner von einem Schnittpunkt frei sind. Es hat sich erwiesen, dass durch das Vorsehen windschief laufender Faltachsen eine Faltlogik erreicht werden kann, die ein wesentlich kompakteres Zusammenfalten der Einzelkomponenten des Rollers ermöglicht. Anschaulich können durch eine solche windschiefe Faltachsengeometrie die Einzelkomponenten beim Zusammenfalten vor einem Anstoßen aneinander bewahrt werden. Gleichzeitig kann ein Abstand zwischen solchen Komponenten in einem zusammengefalteten Zustand sehr gering gehalten werden. Das resultierende Packmaß ist sehr gering.

Im Weiteren werden zusätzliche Ausgestaltungen der Erfindung beschrieben. Diese geltend sowohl für den Roller gemäß dem ersten Aspekt, das heißt einem Roller mit zueinander versetzt angeordneten Trittbrettbereichen, als auch für den Roller gemäß dem zweiten Aspekt, der unter Einsatz zueinander windschiefer Faltachsen faltbar ist.

Der Roller kann als zusammenfaltbarer Roller ausgestaltet sein. Das Trittbrett kann eingerichtet sein, in einem (ganz oder teilweise) zusammengefalteten Zustand des Rollers oder während des Zusammenfaltens des Rollers als im Wesentlichen ebene Untergrundauflage auf einem Untergrund aufzuliegen und ein Gewicht des zusammengefalteten Rollers zu tragen. Das Aufsetzen des Rollers auf einen Untergrund mittels des Trittbretts kann ebenso einen Schutz des zusammengefalteten Rollers vor Umfallen bewirken. Ferner kann diese Funktion des Trittbretts auch während des Transports, während des Ausfaltens oder während der Lagerung des zusammengefalteten Rollers (zum Beispiel in einer Garage) vorteilhaft sein. Somit kann die Geometrie des Rollers derart sein, dass wenn der Roller zusammengefaltet ist, eine Fläche des Trittbretts als im Wesentlichen plane Untergrundauflage dient. Dies ermöglicht eine benutzerfreundliche Stützfunktion während des Zusammenfaltens und gegebenenfalls auch während des Verpackens des zusammengefalteten Rollers zum Weitertransport. In einer solchen Konfiguration sind die zusammengefalteten Komponenten des Rollers alle auf einer Seite des als ebene Untergrundauflage dienenden Trittbrettbereichs angeordnet, so dass in diesem Zustand das Trittbrett einen Endabschnitt bildet.

Gemäß einem Ausführungsbeispiel können der erste Trittbrettbereich und der zweite Trittbrettbereich einstückig zusammenhängend ausgebildet sein. Zum Beispiel können die beiden Trittbrettbereiche Komponenten einer einzigen gemeinsamen Trittbrettplatte sein, die sich so erstreckt, dass einerseits der Längsachse des Rollers der erste Trittbrettbereich und andererseits der Längsachse des Rollers der andere Trittbrettbereich gebildet ist. Eine solche einstückige Konfiguration ermöglicht einen geringen Aufwand beim Herstellen des Rollers und eine hohe Stabilität.

Gemäß einem alternativen bevorzugten Ausführungsbeispiel können der erste Trittbrettbereich und der zweite Trittbrettbereich als voneinander separate Komponenten ausgebildet sein. In diesem Ausführungsbeispiel sind die beiden Trittbrettbereiche vollständig getrennte Komponenten, die auch unabhängig voneinander bewegt, insbesondere verdreht oder verkippt, werden können. Dies bewirkt ein hohes Maß an Flexibilität beim Einsatz des Rollers, da es zum Beispiel ermöglicht ist, den Roller in einem Rollbetrieb (zum Beispiel in der Ebene) so zu betreiben, dass ein Trittbrettbereich eingeklappt wird und somit der freiwerdende Raum für ein Antriebsbein des Benutzers frei wird. Das andere Bein des Benutzers kann dann auf den nicht aufgezeigten Trittbrettbereich aufgelegt werden. Für einen rollenden Betrieb bergab können beide Trittbrettbereiche geklappt werden (das heißt sie können nach oben oder nach unten geklappt oder geschwenkt werden oder können seitlich hinein oder hinaus gedreht werden), um beide Füße des Benutzers zu tragen. Je nach gewünschter Betriebsart des Rollers, das heißt insbesondere Verwendung des linken Fußes oder des rechten Fußes als Antriebfuß, kann ein vorderer Trittbrettbereich und/oder ein hinterer Trittbrettbereich entsprechend geklappt werden, um dem Antriebfuß einen effizienten Antrieb des Rollers zu ermöglichen. Anders ausgedrückt kann ein Hochklappen derart erfolgen, dass ohne Anstoßen oder Behinderung eines Fußes ein Antrieb des Rollers ermöglicht wird.

Jeder der Trittbrettbereiche kann zum Beispiel aus Holz hergestellt werden. Es ist aber auch jedes andere Material geeignet, das eine ausreichend hohe Festigkeit aufweist, um die Trittbrettbereiche als dünne Platten auszubilden. Vorzugsweise ist eine Dicke der Trittbrettbereiche kleiner als 1 cm, vorzugsweise kleiner als 0,5 cm. Es ist auch möglich, die Trittbrettbereiche aus einem Verbundwerkstoff herzustellen. Zum Beispiel kann mit einer wabenartigen Geometrie eines solchen Verbundwerkstoffs eine hohe Festigkeit bei geringem Gewicht erreicht werden. Auch Karbon, Kunststoffe oder Leichtmetalle sind als Materialien für die Trittbrettbereiche verwendbar.

Gemäß einem exemplarischen Ausführungsbeispiel kann der erste Trittbrettbereich und/oder der zweite Trittbrettbereich entlang der Längsachse des Rollers einklappbar ausgebildet sein. Mit anderen Worten kann die Längsachse des Rollers eine Klappachse bilden, an der einer oder beide Trittbrettbereiche angekoppelt werden. In einem ausgefahrenen Zustand sind die Trittbrettbereiche mit ihren Trittflächen zum Beispiel im Wesentlichen horizontal (das heißt im Wesentlichen parallel zu einem Untergrund) orientiert, wobei in dem eingeklappten Zustand die Trittflächen der Trittbrettbereiche entlang der Gravitationskraft verlaufen. Ein solches Einklappen ermöglicht und unterstützt einen besonders platzsparenden Transport des Rollers in einem zusammengefalteten Zustand und erhöht, wie beschrieben, die Einsatzmöglichkeiten sowie die Sicherheit gegen unerwünschtes Hängenbleiben des Rollers, da damit ein effizienter und sicherer Rollbetrieb in der Ebene ermöglicht ist. Es ist auch möglich, dass die Trittbrettbereiche in einem ausgefahrenen Zustand gegenüber der Horizontalen leicht nach oben geneigt sind, um ein seitliches Abrutschen zu vermeiden bzw. erst bei Ausüben einer Gewichtskraft in den horizontalen Zustand übergeführt zu werden.

Der erste Trittbrettbereich und/oder der zweite Trittbrettbereich können so konfiguriert sein, dass sie in einem unbelasteten Zustand (das heißt wenn ein Benutzer nicht auf den Trittbrettbereichen steht) eingeklappt sind und erst bei Belastung mit einem Gewicht des Benutzers ausklappen. Zum Beispiel können die entsprechend ausgestalteten Trittbrettbereiche mittels einer Federkraft oder einer sonstigen Vorspanneinrichtung mit einer Vorkraft beaufschlagt werden, die dann, wenn ein Benutzer nicht auf dem Trittbrettbereich steht, zu einem Hochklappen der Trittbrettbereiche führen. Erst wenn ein Benutzer mit seiner Gewichtskraft auf die Trittbrettbereiche aufsteigt, werden diese nach unten ausgeklappt. Dies hat den Vorteil, dass das System in einem kraftfreien Zustand ohne eine besondere Benutzeraktivität selbsttätig in eine platzsparende Konfiguration ohne seitlich herausragende Trittbrettbereiche übergeht.

Alternativ können der erste Trittbrettbereich und/oder der zweite Trittbrettbereich erst bei Betätigen eines Einklappmechanismus durch einen Benutzer einklappen. In dieser Ausgestaltung sind die Trittbrettbereiche standardmäßig ausgeklappt und klappen nur dann ein, wenn ein Benutzer einen entsprechenden Einklappmechanismus (zum Beispiel mittels Drückens eines Knopfs oder Umlegens eines Hebels) aktiv betätigt. Ein solcher Mechanismus hat den Vorteil, dass bei ihm ein unerwünschtes Einklappen des Trittbrettbereichs zu jedem Zeitpunkt sicher vermieden ist, da immer zunächst ein Betätigungsmechanismus aktiviert werden muss, um den Trittbrettbereich auszufahren. Im aus- und/oder im eingeklappten Zustand kann optional eine Verriegelung vorgesehen sein, mit der ein Benutzer diesen Zustand dauerhaft fixieren kann.

Der erste Trittbrettbereich und/oder der zweite Trittbrettbereich kann/können in einer Abstützfläche zum Abstützen der zwei Füße des Benutzers eine Verrutschschutzeinrichtung, insbesondere Noppen, aufweisen. Ein Flächenbereich der Trittbrettbereiche, auf die ein Benutzer seine Füße auflegt, kann somit mit Noppen oder anderen reibungsverstärkenden Elementen versehen sein, um ein unerwünschtes Entfernen der Füße von den Trittbrettbereichen zum Beispiel während des Rollbetriebs sicher zu vermeiden. Solche Noppen können zum Beispiel Spikes sein, die aus Sicherheitsgründen in Form von Kegeln mit abgeflachten Spitzen realisiert sein können. Spikes sind insbesondere bei Schlamm oder sonstigen Schlechtwetterbedingungen vorteilhaft, da insbesondere bei feuchten Bedingungen Rutschmatten oder dergleichen verschmieren können, während Spikes immer noch ihre vorteilhafte Wirkung erfüllen können. Damit ist einerseits ein sicheres Verharren der Füße des Benutzers auf dem jeweiligen Trittbrettbereich sichergestellt, andererseits ist die Noppierung aber auch so vorgesehen, dass keinerlei Verletzungsgefahr zum Beispiel im Falle eines Sturzes besteht. Anstelle von Noppen sind auch Rippen möglich, die zum Beispiel entlang zweier zueinander orthogonaler oder schräger Richtungen auf zumindest einem der Trittbrettbereiche angeordnet sein kann. Es ist auch möglich, hochstehende Zacken an der Fußaufstandsfläche der Trittbrettbereiche vorzusehen. Es ist ferner möglich, in den Trittbrettbereichen Durchgangslöcher vorzusehen, durch welche hindurch Erde oder sonstiger Schmutz während des Fahrbetriebs abgeführt werden kann, ohne sich auf einer rutschfesten Trittbrettoberfläche anzusammeln. Zum Beispiel können die Trittbrettbereiche auch als Gitter, zum Beispiel Metallgitter, vorgesehen sein. Es ist auch möglich, Durchgangsbohrungen in den Trittbrettbereichen vorzusehen, um durch diese hindurch Schmutz oder Wasser nach unten hin abzuführen.

Es ist möglich, die Trittbretter oder Trittbrettbereiche auswechselbar an dem Roller anzubringen. Die Trittbrettbereiche können Verschleißteile sein, da sie mechanische Belastungen von anderen Komponenten des Rollers abhalten. Um den Roller für möglichst viele unterschiedliche Anwendungen zugänglich zu machen, können unterschiedliche Trittbretter modular an dem Roller montiert werden, zum Beispiel unterschiedliche Trittbretter für Geländefahrten, Straßenfahrten, etc.

Der Roller kann ferner einen Rahmen aufweisen, wobei der erste Trittbrettbereich und/oder der zweite Trittbrettbereich an einer Unterseite des Rahmens montiert sein kann. Der Rahmen kann zum Beispiel ein Metallrohr aufweisen und die strukturelle Komponente sein, welche das Vorderrad mit dem Hinterrad verbindet. Ausgehend von dem Rahmen kann sich ein Lenkelement erstrecken. Wenn einer oder beide Trittbrettbereiche an einer Unterseite des Rahmens montiert sind, kann bei dennoch guter Unterbodenfreiheit ein sehr tiefer Schwerpunkt des Rollers erreicht werden, was aus Sicht der Stabilität vorteilhaft ist. Die Unterrahmenmontage ermöglicht somit einen tiefen Schwerpunkt bei (aufgrund der Ausgestaltung der Trittbrettbereiche als dünne Platten) maximaler Bodenfreiheit.

Vorteilhaft kann der Roller eine Dämpfungseinrichtung aufweisen, die zum Dämpfen einer auf dem ersten Trittbrettbereich und/oder einem zweiten Trittbereich einwirkenden mechanischen Belastung ausgebildet ist. Während des Abfahrtsbetriebs des Rollers, zum Beispiel einen Berg hinunter, kann der Roller immer wieder Stößen ausgesetzt sein. Indem eine Dämpfungseinrichtung eine Abmilderung von mechanischen Belastungen auf den jeweiligen Trittbrettbereich bewirkt, kann der Fahrkomfort weiter erhöht werden.

Bei einem solchen gedämpften Trittbrett kann die Dämpfeinrichtung die harten Schläge des Untergrundes abfedern (Steine, Absätze) und bei Schotterstraßen feine Vibrationen dämpfen. Dies ist gegenüber einem Dämpfer in der Hinterradschwinge wesentlich weniger aufwendig, leichter im Gewicht und günstiger. Im Gegensatz zu einem Fahrrad ist bei einem Roller die Dämpfung der Standflächen möglich. Bei dem Fahrrad würde diese Dämpfung zu einem Kraftverlust beim Treten führen. Beim Roller spielt dies keine Rolle, da der Benutzer ja nicht in Pedale treten muss. Die Dämpfungselemente haben den weiteren vorteilhaften Effekt, dass damit auch die Bruchgefahr der Trittbretter verringert ist. Somit können harte Schläge abgefedert werden.

Drehpunkte zwischen Rahmen und Trittbrettbereichen erfüllen somit mindestens drei Funktionen:
- sie ermöglichen hochklappende Trittflächen (Sicherheit, Ermöglichung Rollerbetrieb, geringes Packmaß)
- sie verbinden das Trittbrett mit dem Rollerrahmen
- sie bilden den Drehpunkt für das Dämpfungsprinzip

Die Dämpfungseinrichtung kann an dem Rahmen derart montiert sein, dass erst bei einem Herunterklappen der Trittbrettbereiche eine Wirkverbindung der Dämpfungseinrichtung zu den Trittbrettbereichen hergestellt wird. Anders ausgedrückt kann die Dämpfungseinrichtung an einer Unterseite des Rahmens angebracht sein und nach Herunterklappen der Trittbrettbereiche zwischen Rahmen und den darunter federnden Trittbrettbereichen angeordnet sein. Die Dämpfungseinrichtung kann alternativ an den Trittbrettbereichen montiert sein. Die Trittbrettbereiche können somit eine Fußaufstandsfläche und einen Montageabschnitt an dem Rahmen aufweisen, wobei die Dämpfungseinrichtungen an dem Montageabschnitt vorgesehen sein können.

Die Dämpfungseinrichtung kann mindestens ein elastisches Element aufweisen (vorzugsweise mehrere elastische Elemente), das die Dämpfungswirkung herbeiführt. Unter dem Begriff elastisch kann in diesem Fall eine federnde oder mechanisch flexible Konfiguration verstanden werden, welche bei einer einwirkenden Belastung nachgiebig dämpfend auf die Trittbrettbereiche einwirkt. Unter dem Begriff "elastisches Material" wird in diesem Zusammenhang insbesondere ein Material verstanden, das ein Elastizitätsmodul in einem Bereich von 0.001 kN/mm² bis 2 kN/mm², insbesondere von 0.01 kN/mm² bis 0.2 kN/mm² aufweist. Insbesondere kann es vorteilhaft sein, eine Mehrzahl (zum Beispiel drei bis fünf) von elastischen Elementen für einen jeweiligen des ersten Trittbrettbereichs und des zweiten Trittbrettbereichs parallel zu deren Längsachsen (und/oder entlang anderer Achsen, zum Beispiel einer Querachse), insbesondere rahmenseitig, vorzusehen. Zum Beispiel kann eine lineare Anordnung von elastischen Elementen parallel zu einer Fußerstreckungsrichtung/Kippachse bezüglich jedem der Trittbrettbereiche angeordnet werden, vorteilhaft in einem Bereich, in dem die Trittbretter an den Rahmen angrenzen. Alternativ kann die Dämpfungseinrichtung als ein einziges langgestrecktes Gummielement ausgebildet sein.

Die Dämpfungseinrichtung kann zwischen dem Rahmen einerseits und dem ersten Trittbrettbereich/dem zweiten Trittbrettbereich andererseits angeordnet sein. Durch diese Anordnung zwischen Rahmen und Trittbrettbereichen kann eine aufwendige Dämpfung mittels einer Hinterradschwinge vermieden werden, was nicht nur Kosten- und Gewichtsvorteile bewirkt, sondern auch eine Dämpfung speziell zwischen den beiden stark belasteten Komponenten Trittbrett und Rahmen ermöglicht. Somit ist eine solche Dämpfung günstiger und leichter als eine aufwendige Hinterradschwinge. Es ist allerdings bei Ausführungsbeispielen der Erfindung möglich, optional eine solche Hinterradschwinge vorzusehen.

Die Dämpfungseinrichtung kann zum Beispiel eine Mehrzahl von Blöcken aus elastischem Material (zum Beispiel Gummiblöcken) aufweisen. Ist eine härtere Federung gewünscht, so kann dem elastischen Material ein härteres Material beigemischt werden oder das elastische Material vollständig durch ein härteres Material ersetzt werden. Alternativ zu dem Vorsehen von Blöcken aus elastischem Material können auch Sprungfedern, etc. vorgesehen werden. Die Härte eines Dämpfungselements kann je nach Fahrergewicht variiert werden. Zu diesem Zweck können unterschiedlich harte Gummimischungen verwendet oder die Anzahl der Dämpfungspunkte verändert werden. Es ist auch möglich, als Dämpfungselemente Stahlfedern zu verwenden.

Wenn ein Trittbrettbereich rechtwinklig oder im Wesentlichen rechtwinklig ausgebildet ist, kann eine Erstreckung in Längsrichtung zum Beispiel zwischen 5 cm und 50 cm betragen, insbesondere zwischen 20 cm und 35 cm. In einem solchen Fall kann eine Erstreckung in Querrichtung zum Beispiel zwischen 5 cm und 20 cm betragen, insbesondere zwischen 8 cm und 12 cm.

Es ist möglich, an den Trittbrettbereichen eine Verbindungseinrichtung zum Herstellen einer Verbindung zwischen dem jeweiligen Trittbrettbereich und einem Schuh eines Benutzers vorzusehen. Zum Beispiel kann dies mittels einer Halteschlaufe erfolgen, die sich senkrecht zur Längsachse über die Breite eines Trittbrettbereichs hinweg oder über einen Teil der Breite erstrecken kann. Alternativ zu einer solchen Halteschlaufe kann ein Klicksystem eingesetzt werden, das mittels einer Klick-Verbindung den Schuh an dem Trittbrettbereich fixiert.

Gemäß einem anderen Ausführungsbeispiel weist der Roller einen Rahmen mit entlang der Längsachse verlaufend und zueinander parallel versetzten Rahmenstücken und einem zwischen den beiden Rahmenstücken angebrachten Überbrückungsabschnitt auf. Der Überbrückungsabschnitt kann winkelig (rechtwinklig oder von einem rechten Winkel abweichend) zu den parallelen Rahmenstücken verlaufen. An jedem der Rahmenstücke kann einer der Trittbereiche angeordnet sein. Mit dem schräg gegenüber den Rahmenstücken verlaufenden Zwischenabschnitt oder Überbrückungsabschnitt kann der Roller auf die anatomischen Eigenschaften des Benutzers (Beinabstand) angepasst werden, das heißt ein ausreichender seitlicher Abstand zwischen den Trittbrettbereichen herbeigeführt werden. Die längsgestreckten, zueinander parallel versetzten Rahmenstücke können somit in Längsrichtung die Ausdehnung des Rollers bestimmen, wohingegen die seitliche Beabstandung durch den schräg oder rechtwinklig oder senkrecht zu den beiden Rahmenstücken vorgesehenen Überbrückungsabschnitt hergestellt wird.

Das Trittbrett kann einen dritten Trittbrettbereich aufweisen, der auf derselben Seite bezüglich der Längsachse wie der erste Trittbrettbereich angeordnet sein kann und parallel zu dem zweiten Trittbrettbereich verlaufend angeordnet sein kann. Somit kann optional ein weiteres (zum Beispiel klappbares) Trittbrett vorgesehen werden, das auch einen Betrieb mit einer Parallelstellung der Beine ermöglicht. Insbesondere können die beiden bezüglich des Rahmens spiegelsymmetrisch angeordneten beiden Trittbretter vor dem hinteren Trittbereich angeordnet sein, das auf der gegenüberliegenden Seite des Rahmens dann kein Pedant aufweisen muss, aber kann.

Es ist möglich, an dem Rahmen Vorkehrungen für eine wahlweise linksseitige oder rechtsseitige Montage eines jeweiligen der Trittbrettbereiche vorzusehen. Somit kann der Roller sowohl für Linkshänder als auch für Rechtshänder zugänglich gemacht werden bzw. kann auf die Bedürfnisse eines Benutzers flexibel angepasst werden. Insbesondere erlaubt dies bei einem Roller, einen benutzerdefinierten Wechsel der versetzten Fußstellung zu ermöglichen. Solche Vorkehrungen können Scharniere umfassen, die doppelt, d.h. linksseitig und rechtsseitig, an einem Rahmen angebracht sein können. Auch eine Dämpfungseinrichtung kann linksseitig und rechtsseitig des Rahmens angeordnet sein. Es ist ebenfalls möglich, an dem Rahmen Vorkehrungen zu treffen, die sowohl ein Umklappen an einer Faltachse nach links oder wahlweise nach rechts ermöglichen. Eine solche symmetrische Konfiguration kann dadurch weiter verbessert werden, dass ein Bremskabel mittig aus einem Gabelschaft herausgeführt wird, anstelle einer seitlichen Herausführung.

Somit kann zusammenfassend eine im Wesentlichen wartungsfreie Trittbrettkonfiguration bereitgestellt werden, die wahlweise in einer Linkshänderkonfiguration oder in einer Rechtshänderkonfiguration (durch Spiegelung am Rahmen) ausgeführt werden kann. Die drehbare (zum Beispiel in einer horizontalen Ebene) oder klappbare (zum Beispiel in einer vertikalen Ebene) Lagerung trägt zu dem geringen Packmaß eines zusammengefalteten Rollers bei. Es kann insbesondere vorteilhaft sein, eine Vorderseite der Trittbretter abzuschrägen, so dass sich diese Vorderseite in Richtung der Längsachse bzw. des Rahmens nach vorne hin verjüngt.

Bei dem Roller kann ein vorderer und/oder einem hinterer Endabschnitt des Trittbretts ein Schutzmerkmal zum Schützen eines Rahmens gegen mechanische Einwirkungen aufweisen. Insgesamt können die Trittbrettbereiche als Rahmenschutz gegen Steine oder dergleichen dienen, die beim Betrieb des Rollers in unwegsamem Gelände vor einer zu starken mechanischen Belastung schützen. Zum Beispiel können die Trittbrettbereiche als Verschleißteile ausgeführt sein. Zum Rahmenschutz können an einer äußeren Vorderseite die Trittbrettbereiche sich nach innen hin verjüngen. Es ist auch möglich, an den Trittbrettbereichen zum Rahmenschutz ein Schutzelement anzubringen, zum Beispiel eine metallische Verstärkung oder ein separates Schutzblech zum Schutz des Rahmens vor Steinschlag, vor einem unerwünschten Aufsitzen des Rahmens auf einem Untergrund und dergleichen. Ein solches Schutzmerkmal kann auch eine unterseitige durchgängige Fläche sein, die es ermöglichen kann, über Hindernisse hinweg zu rutschen. Dies erhöht unter dem Gesichtspunkt des Vermeidens eines Hängenbleibens des Rollers aber auch unter dem Gesichtspunkt des Fahrspaßes die Vielfalt der Einsatzmöglichkeiten des Rollers.

Gemäß einem Ausführungsbeispiel kann der Roller eingerichtet sein, zum Zusammenfalten eine Faltung aus der Längsachse heraus und eine andere Faltung in die Längsachse hinein zu vollführen.

Gemäß einem Ausführungsbeispiel kann zunächst eine erste Faltung so erfolgen, dass ein Hinterrad aus der Längsachse heraus weggeklappt wird, zum Beispiel unter Verwendung einer Faltachse, die winkelig (zum Beispiel spitzwinklig, rechtwinklig oder stumpfwinklig) zu der Längsachse verlaufen kann. Die zweite Faltung kann dann im Wesentlichen senkrecht (oder spitzwinklig oder stumpfwinklig) zu der Längsachse erfolgen, wobei ein Vorderrad und ein angebrachtes Rahmenteil anschaulich nach hinten weggefaltet werden, so dass die Faltrichtungen zum Einfalten des Hinterrads und des Vorderrads voneinander beabstandet und in einem Winkel zueinander verlaufen können. Durch die beiden Faltprozeduren werden anschaulich die beiden Räder aufeinander zu bewegt, in Seitenansicht sogar ein Rad in das Auge des anderen hinein bewegt.

Es ist zum Beispiel möglich, zum Zusammenfalten eine Faltung mit einer zu der Längsachse orthogonalen Faltachse und eine andere Faltung mit einer bezüglich der Längsachse spitzwinklig angeordneten anderen Faltachse zu vollführen. Mit der orthogonalen Faltung mit einer Faltachse parallel zu einer Radachse kann das Vorderrad nach hinten umgeklappt werden. Mit der anderen Faltung kann das Hinterrad mit einer vertikalen und einer horizontalen Faltachsenkomponente nach vorne umgeklappt werden.

Insbesondere kann der Roller eingerichtet sein, zum Zusammenfalten eine erste Faltung eines hinteren Rahmenabschnitts gemeinsam mit einem hinteren der Räder zu vollführen, womit das hintere Rad einen vorderen Rad angenähert und gegenüber einem mittleren Rahmenabschnitt angehoben wird. Schließen vor dieser Faltprozedur der hintere Rahmenabschnitt und ein mittlerer Rahmenabschnitt im Wesentlichen einen 180° Winkel (oder einen größeren Winkel) oder zumindest einen sehr stumpfen Winkel ein, so ist nach diesem Einklappen der Winkel zwischen dem hinteren Rahmenabschnitt und dem mittleren Rahmenabschnitt ein spitzer Winkel.

Der Roller kann eingerichtet sein, zum Zusammenfalten eine zweite Faltung eines vorderen Rahmenabschnitts gemeinsam mit dem vorderen Rad zu vollführen, womit das vordere Rad dem hinteren Rad weiter angenähert und gegenüber dem mittleren Rahmenabschnitt angehoben wird. Vor diesem zweiten Faltvorgang können angrenzende Rahmenabschnitte des vorderen und des mittleren Rahmenabschnitts wiederum im Wesentlichen einen 180° Winkel einschließen. Nachdem die Faltung durchgeführt worden ist, schließen diese beiden Teilabschnitte des vorderen Rahmenabschnitts und des mittleren Rahmenabschnitts wieder einen spitzen Winkel ein, was zu einem geringen Packmaß führt.

Der Roller kann so eingerichtet sein, dass (insbesondere vor der zweiten Faltung) ein Lenkelement von dem vorderen Rahmenabschnitt abzuziehen und (insbesondere nach der zweiten Faltung) das Lenkelement an dem zusammengefalteten Roller zu befestigen ist. Durch das Vorsehen eines abnehmbaren Lenkelements kann das Packmaß weiter verringert werden.

Der mittlere Rahmenabschnitt kann einen ersten langgestreckten Arm und einen zweiten langgestreckten Arm aufweisen, die zueinander abgewinkelt angeordnet sind. Der erste langgestreckte Arm ist jener, der vor dem Falten einen im Wesentlichen 180° Winkel mit dem vorderen Rahmenabschnitt einschließt. Der andere langgestreckte Arm ist jener, der vor dem Falten mit dem hinteren Rahmenabschnitt ein im Wesentlichen 180° Winkel einschließt. Der Winkel zwischen den beiden langgestreckten Abschnitten kann insbesondere ein stumpfer Winkel sein, was im entfalteten Zustand zu einer ergonomischen Fahrradrollergeometrie und im eingefalteten Zustand zu einem geringen Packmaß führt.

Alternativ kann der mittlere Rahmenabschnitt aus einem einzigen gebogenen Abschnitt gebildet sein. Bei einer solchen Ausführungsform kann auf ein Abwinkeln zweier langgestreckter Abschnitte verzichtet werden, stattdessen kann eine stetige Biegung mit einer konstanten oder veränderlichen Steigung und Krümmung vorgesehen sein.

Das vordere der beiden Räder kann mittels einer Einarmgabel, insbesondere einer Einarmfedergabel, an dem Rahmen montiert sein, womit das Packmaß weiter reduziert wird, da die Einarmgabel nur auf einer Seite des Rads verläuft. Ferner verringert eine solche Maßnahme ein Verletzungsrisiko beim Transport des Rollers im eingeklappten Zustand, da der Roller eine im Wesentlichen glatte Fläche aufweisen kann, wenn die Gabel nur einseitig des Rads angeordnet wird.

Ein hinteres der zwei Räder kann mit einer Einarmschwinge ausgestattet sein. Eine solche Einarmschwinge erlaubt zum Einklappen einen Schwingvorgang nur an einer Seite des Rades durchzuführen, was ebenfalls zur Verringerung des Packmaßes beiträgt, insbesondere in Kombination mit einer Einarmfedergabel.

Ferner kann der Roller ein Lenkelement aufweisen, das abnehmbar an dem Rahmen anbringbar ist. Durch das Kombinieren von zwei Faltungen mit dem Abnehmen eines Lenkelementes kann das Packmaß des Rollers weiter verringert werden.

Das Lenkelement kann einen Lenker (insbesondere Lenkgriffe, an die Hände des Benutzers angreifen können) und einen Vorbau des Rollers einstückig vereinen. Dadurch kann eine leichtgewichtige und platzsparende Ausgestaltung des Rollers mit einer effizienten Kraftübertragung kombiniert werden. Anschaulich kann das Lenkelement Y-förmig mit seitlich von den oberen Endpunkten des Y nach außen verlaufenden Handgriffen ausgestaltet sein.

Für die oben beschriebene Faltlogik in Verbindung mit dem sehr kleinen Packmaß ist es vorteilhaft, den Lenker abnehmbar zu machen. Hierfür kann eine Lenkkopfhülsenkonstruktion verwendet werden, welche die Verbindungsstelle zwischen dem klemmbaren Lenker und einem Gabelschaft herstellt.

Die Lenkkopfhülse kann mittels einer Klemmung am Schaft der Federgabel befestigt werden. Der Lenker kann so ausgeführt werden, dass kein separater Vorbau benötigt wird. Anders ausgedrückt können Vorbau und Lenker einstückig ausgeführt sein. Dies führt zu einer Gewichtsersparnis. Der Lenker kann so ausgeführt sein, dass eine Klemmung mittels zwei Schnellspanner möglich ist. Die Schnellspanner können redundant vorgesehen sein, um die Sicherheit zu erhöhen. Unter "redundant" wird dabei verstanden, dass mehr Schnellspanner vorgesehen sind, als für eine Befestigung unbedingt erforderlich wären.

Der Gabelschaft kann somit eine Lenkkopfhülse aufweisen, wobei das Lenkelement mittels der Lenkkopfhülse an dem Gabelschaft klemmend anbringbar ist. Diese Konfiguration erlaubt im Wesentlichen mit einem Handgriff eine Montage oder Demontage des Lenkelements bezüglich des Rahmens, was einen schnellen Aufbau und ein schnelles Einfalten des Rollers unterstützt. Die Lenkkopfhülse kann zum Fixieren aller Lenkkopfteile wie Lager und Federgabel dienen.

Zum klemmenden Anbringen des Lenkelements an der Lenkkopfhülse kann mindestens ein Schnellspanner vorgesehen sein, zum Beispiel an dem Lenkelement angebracht sein. Als Schnellspanner kann vorteilhaft ein an sich bekanntes Spannelement verwendet werden, mit dem durch Kraftübertragung auf einen Betätigungshebel eine schnelle und sichere Befestigung des Lenkelements an der Lenkkopfhülse ermöglicht werden kann. Vorteilhaft können zwei solche Schnellspanner vorgesehen sein, die aufgrund ihrer Redundanz die Befestigungssicherheit weiter erhöhen.

Um ein leichteres Öffnen und Schließen der Schnellspanner zu ermöglichen, können diese mit einem Seil miteinander verbunden werden. Zusätzlich kann das Seil im eingehängten Zustand als zusätzliche Sicherungsstufe dienen, die vermeidet, dass sich die Schnellspanner beim Einhängen zum Beispiel an einem Ast öffnen. Bei Vorsehen von zwei Schnellspannern können diese mittels einer optionalen Seilverbindung als zusätzliche Sicherungsstufe und zum Erhöhen des Komforts bei der Montage des Rollers miteinander gekoppelt sein. Diese Seilverbindung kann vermeiden, dass sich die Schnellspanner unerwünscht öffnen.

Als zusätzliche Sicherheitsstufe kann ein Kugelschnapper im Lenker integriert werden, der beim Aufschieben in die Lenkkopfhülse einrastet. Dadurch kann vermieden werden, dass bei geöffneten Schnellspannern der Lenker abgezogen werden kann. Die Verdrehung des Lenkers kann durch eine Flachstelle (könnte aber auch als Einkerbung oder alternativ ausgeführt werden) auf der Lenkkopfhülse verhindert werden. Auch der Kugelschnapper kann dazu beitragen. Der Roller kann somit einen Kugelschnapper aufweisen, der zum Einschnappen bei Anbringen des Lenkelements an der Lenkkopfhülse, oder *vice versa,* eingerichtet ist. Gemäß einer ersten Variante kann der Kugelschnapper in die Lenkkopfhülse einschnappen. Gemäß einer zweiten Variante kann der Kugelschnapper in das Lenkelement einschnappen. Das Lenkelement oder die Lenkkopfhülse kann daher einen Kugelschnapper aufweisen, der zum Einrasten bei Anbringen des Lenkelements an der Lenkkopfhülse eingerichtet ist. Während ein Kugelschnapper allein aufgrund der bereitgestellten Sicherheit nicht in jedem Fall ausreichend sein mag, erlaubt der in den Lenker integrierte Kugelschnapper eine schnelle vorläufige Befestigung und somit eine benutzerfreundliche Bedienung des Roller, die mit einer durch einen Schnellspanner erreichbaren Klemmung sicherer gemacht werden kann. Der Kugelschnapper stellt ein zusätzliches Sicherheitsmerkmal dar, wenn sich ein Schnellspanner unerwünscht lösen sollte.

Der Roller kann ferner einen Verdrehschutz aufweisen, der ein unerwünschtes Verdrehen des Lenkelements bezüglich des Gabelschafts verhindern kann.

Der Roller kann ein Reibvermeidungselement zum Vermeiden einer Direktreibung zwischen dem Lenkelement und der Lenkkopfhülse aufweisen. Wenn zum Beispiel Lenkelement und Lenkkopfhülse aus Aluminium oder dergleichen hergestellt sind, kann eine Direktreibung zweier solcher Komponenten zu einer Verschlechterung der Reibflächen führen, was mit dem Anordnen eines Reibvermeidungselements zwischen zwei solchen Reibflächen zuverlässig vermieden werden kann. Das Reibvermeidungselement kann zum Beispiel aus einem Kunststoffmaterial vorgesehen sein. Es kann zum Beispiel als Hülse realisiert sein, die um die Lenkkopfhülse herum verläuft. Es kann alternativ als eine oder eine Mehrzahl von Hohlrohren (oder aus Rohren aus Vollmaterial) zum Beispiel aus Kunststoff ausgeführt sein, die nachgiebig an einem äußeren Umfang der Lenkkopfhülse angeordnet sein können, um nach Befestigung eines metallrohrartigen Endabschnitts des Lenkelements an der Lenkkopfhülse die Direktreibung zwischen Lenkkopfhülse und Lenkelement zumindest herabzusetzen.

Zu einer erhöhten Stabilität führt ein durchgängiger Übergang vom Steuerrohr in den Lenker. Ferner ist es möglich, ein Steuerlager mit integriertem Anschlag (zum Beispiel Block-Lock-System der Firma Acros) auszugestalten. Dies vermeidet, dass die Federgabel bei einem zu starken Einlenken den Rahmen beschädigt oder dass Bremskabel abgerissen werden.

Gemäß einem exemplarischen Ausführungsbeispiel der Erfindung ist ein faltbares, geländetaugliches und leichtes Gerät zum Herabrollen von einem Berg oder zum Fortbewegen in der Ebene bereitgestellt. Der Roller kann einen niedrigen Schwerpunkt haben, längsversetzte Trittbretter, leistungsstarke Bremsen, einen leichten Rahmen (zum Beispiel aus Aluminium) und hochwertige Reifen, die für geländetaugliches Rollen geeignet sein können. Zur Fortbewegung auf dem Roller kann ein Benutzer auf dem Roller stehen und in der Ebene eine Rollertechnik verwenden. Beim Abfahren kann der Benutzer sich mit beiden Füßen auf den Roller stellen und somit in sicherer Weise einen Berg herunter rollen. Aufgrund des geringen Packmaßes des faltbaren Rollers ist eine leichte Verstaubarkeit sowohl beim Abstieg als auch in einem Auto oder einem öffentlichen Verkehrsmittel oder in Liftanlagen möglich.

Aufgrund einer Aluminiumleichtbauweise, einer ausgefeilten Geometrie und gezielt zusammengestellten Komponenten ist es möglich, den Roller mit einem Gewicht von 8 kg und weniger auszugestalten. Die Fahreigenschaften im Gelände entsprechen einem hochwertigen Mountainbike. Mit der Faltlogik des Rollers gemäß einem exemplarischen Ausführungsbeispiel der Erfindung kann ein Packmaß mit Maßen von 75 cm in der Höhe, 50 cm in der Breite und 25 cm in der Tiefe erreicht oder sogar unterschritten werden. Eine gute Standsicherheit gewährleisten die Trittbretter des Rollers, insbesondere das Vorsehen versetzter Trittbretter mit einem optionalen Antirutschsystem. Ein schneller Auf- und Abbau ohne abnehmende Räder ist durch die erfindungsgemäße Faltlogik ermöglicht.

Die Auftrittsfläche des Rollers kann durch zwei Trittbretter realisiert werden. Diese können in Längsrichtung versetzt sein, um eine notwendige Längsstabilität beim Fahren sicherzustellen. Des Weiteren können beide Trittbretter seitlich einklappbar und vorne abgeschrägt sein, um ein Hängenbleiben an Hindernissen zu verhindern. Anschaulich können derartig geformte Trittbretter an Hindernissen wegklappen oder vorbeirutschen. Die Möglichkeit des Einklappens ermöglicht weiterhin eine optimale Rollertechnik oder Schiebetechnik, da der Antriebsfuß direkt am Rahmen verläuft. Ferner ist ein minimales Faltmaß in der Tiefe ermöglicht, da im gefalteten Zustand die Trittbretter nicht oder kaum überstehen. Um gute Trittsicherheit zu gewährleisten, können eindrehbare Spikes am Trittbrett vorgesehen sein. Diese sind stabil und können sich an Bergschuhsohlen fest einkrallen. Sie können an der Spitze gebrochen sein, um Schnittwunden oder andere Verletzungen zum Beispiel im Falle eines Sturzes zu vermeiden. Beide Trittbretter können an der Unterseite des Aluminiumrahmens befestigt sein. Damit kann der Rahmen vor Schlägen geschützt werden und gleichzeitig der Schwerpunkt des Fahrers auf dem Roller abgesenkt werden. Ferner ermöglicht dies ein Rutschen über Steine oder andere Hindernisse an der Unterseite eines Trittbrettbereichs hinweg. Gemäß einem Ausführungsbeispiel kann optional ein besonders großes Trittbrett für eine parallele Fußstellung zum Beispiel im Bereich der vorderen Montagemöglichkeit vorgesehen sein.

Ein Zugelement (zum Beispiel eine Feder) über einem hinteren Hydraulikschlauch kann als Spannvorrichtung für einen Bremsschlauch dienen. Damit kann ein Knicken des Hydraulikschlauches beim Zusammenbau (Faltvorgang) vermieden werden. Der Schlauch ist damit ständig unter geringer Spannung und zieht sich selbsttätig nach innen, wenn beim Schließen des Faltmechanismus ein Einklemmen droht. Eine solche Vorkehrung dient insbesondere als Knickschutz für Leitungen/Schläuche.

An dem Hinterrad kann eine Einarmschwinge vorgesehen sein, um ein geringes Packmaß zu ermöglichen. Der Bremssattel kann in einem oberen Bereich und daher ausreichend beabstandet zu einem möglicherweise schroffen Untergrund angeordnet sein.

Als Reifen können breite Faltreifen vorgesehen sein, um die erforderliche Robustheit für Downhill-Anwendungen bereitzustellen. Ein Aluminiumrahmen kann mit doppelten Schweißnähten ausgeführt werden.

Gute Fahreigenschaften können durch einen tiefen Schwerpunkt erreicht werden, der zum Beispiel durch die Montage der Trittbretter an einer

Unterseite des Rahmens erreicht werden kann. Dies bewerkstelligt einen Schutz gegen seitliches Kippen, eine gute Standfestigkeit und ein hohes Sicherheitsgefühl beim Betrieb. Die versetzte Fußstellung auf den beiden zueinander versetzten Trittbrettern gibt dem Fahrer eine hohe Längsstabilität. Besonders im steilen Gelände können besonders gute Sicherheits- und Fahreigenschaften erreicht werden.

Der Roller gemäß einem exemplarischen Ausführungsbeispiel der Erfindung kann für einen stehenden Betrieb eingerichtet sein, d.h. sitzfrei (ohne Sitz) ausgebildet sein.

Um den zusammengefalteten Roller an einem Zielobjekt zu befestigen, können Halteschlaufen bzw. Haltegummis bereitgestellt werden. Diese können aus dem Lenker herausgezogen werden, um unten und oben am gefalteten Roller eine Befestigung zu erreichen. Diese können selbsteinziehend ausgeführt sein. Dies kann zum Beispiel mittels einer Feder oder einer Schlaufe erfolgen, die selbst ein Gummizug sein kann.

Im Weiteren werden zusätzliche, unabhängige Aspekte der Erfindung beschrieben:
Aspekt 1. Roller zum rollenden Fortbewegen eines Benutzers, wobei der Roller aufweist:
   mindestens zwei Räder, die entlang einer Längsachse des Rollers in Längsrichtung hintereinander angeordnet sind;
   ein Trittbrett, das zum Abstützen zweier Füße des Benutzers eingerichtet ist;
   wobei das Trittbrett einen ersten Trittbrettbereich und einen zweiten Trittbrettbereich aufweist, wobei der erste Trittbrettbereich und der zweite Trittbrettbereich auf gegenüberliegenden Seiten der Längsachse des Rollers
   angeordnet und in der Längsrichtung des Rollers gegeneinander versetzt angeordnet sind.
Aspekt 2. Roller nach Aspekt 1, wobei der Roller als faltbarer Roller ausgestaltet und einer der Trittbrettbereiche eingerichtet ist, in einem zusammengefalteten Zustand des Rollers als im Wesentlichen ebene Untergrundauflage auf einem Untergrund aufzuliegen und ein Gewicht des zusammengefalteten Roller zu tragen.
Aspekt 3. Roller nach Aspekt 1 oder 2, wobei der erste Trittbrettbereich und der zweite Trittbrettbereich einstückig zusammenhängend ausgebildet sind.
Aspekt 4. Roller nach Aspekt 1 oder 2, wobei der erste Trittbrettbereich und der zweite Trittbrettbereich als voneinander separate Komponenten ausgebildet sind.
Aspekt 5. Roller nach einem der Aspekte 1 bis 4, wobei zumindest einer des ersten Trittbrettbereichs und des zweiten Trittbrettbereichs entlang der Längsachse des Rollers an einen Rahmen vertikal anliegend oder unter einem spitzen Winkel zu einer Vertikalen anliegend einklappbar ausgebildet ist.
Aspekt 6. Roller nach Aspekt 5, wobei der zumindest eine des ersten Trittbrettbereichs und des zweiten Trittbrettbereichs in einem unbelasteten Zustand eingeklappt ist und erst bei Belastung mit einem Gewicht des Benutzers ausklappt.
Aspekt 7. Roller nach Aspekt 5, wobei der zumindest eine des ersten Trittbrettbereichs und des zweiten Trittbrettbereichs erst bei Betätigung eines Einklappmechanismus durch einen Benutzer einklappt.
Aspekt 8. Roller nach einem der Aspekte 1 bis 7, wobei zumindest einer des ersten Trittbrettbereichs und des zweiten Trittbrettbereichs an einem vorderen Endabschnitt außenseitig verjüngend ausgebildet ist.
Aspekt 9. Roller nach einem der Aspekte 1 bis 8, wobei zumindest einer des ersten Trittbrettbereichs und des zweiten Trittbrettbereichs an einer Abstützfläche zum Abstützen der zwei Füße des Benutzers eine Verrutschschutzeinrichtung, insbesondere Noppen, weiter insbesondere Spikes, aufweist.
Aspekt 10. Roller nach einem der Aspekte 1 bis 9, ferner aufweisend einen Rahmen, wobei zumindest einer des ersten Trittbrettbereichs und des zweiten Trittbrettbereichs an einer Unterseite des Rahmens montiert ist.
Aspekt 11. Roller nach einem der Aspekte 1 bis 10, ferner aufweisend eine Dämpfungseinrichtung, die zum Dämpfen einer auf zumindest einen des ersten Trittbrettbereichs und des zweiten Trittbrettbereichs einwirkenden mechanischen Belastung ausgebildet ist.
Aspekt 12. Roller nach Aspekt 11, wobei die Dämpfungseinrichtung mindestens ein elastisches Element aufweist, insbesondere eine Mehrzahl von entlang einem jeweiligen des ersten Trittbrettbereichs und des zweiten Trittbrettbereichs parallel zu der Längsachse verlaufend angeordnete elastische Elemente oder ein einziges langgestrecktes entlang einem jeweiligen des ersten Trittbrettbereichs und des zweiten Trittbrettbereichs parallel zu der Längsachse verlaufend angeordnetes elastisches Element aufweist.
Aspekt 13. Roller nach Aspekten 10 und 11, wobei die Dämpfungseinrichtung an dem Rahmen und/oder an dem Trittbrett, insbesondere zwischen dem Rahmen einerseits und dem zumindest einen des ersten Trittbrettbereichs und des zweiten Trittbrettbereichs andererseits angeordnet ist.
Aspekt 14. Roller nach einem der Aspekte 10 bis 13, wobei die Dämpfungseinrichtung eine Mehrzahl von Dämpfungselementen, insbesondere Gummiblöcken, aufweist.
Aspekt 15. Roller nach einem der Aspekte 1 bis 14, ferner aufweisend einen Rahmen mit zwei entlang der Längsachse verlaufend und zueinander parallel versetzten Rahmenstücken und einem die beiden Rahmenstücken winklig überbrückenden Überbrückungsabschnitt, wobei an jedem der Rahmenstücke einer der Trittbrettbereiche angeordnet ist.
Aspekt 16. Roller nach einem der Aspekte 1 bis 15, wobei das Trittbrett einen dritten Trittbrettbereich aufweist, der auf derselben Seite bezüglich der Längsachse wie der erste Trittbrettbereich angeordnet ist und parallel zu dem zweiten Trittbrettbereich verlaufend angeordnet ist.
Aspekt 17. Roller nach einem der Aspekte 1 bis 16, wobei ein vorderer und/oder ein hinterer Endabschnitt des Trittbretts ein Schutzmerkmal zum Schützen eines Rahmens gegen mechanische Einwirkungen aufweist.
Aspekt 18. Roller nach einem der Aspekte 1 bis 17, eingerichtet als Roller mit zumindest einem von den oben beschriebenen Merkmalen.

Im Folgenden werden exemplarische Ausführungsbeispiele der vorliegenden Erfindung mit Verweis auf die folgenden Figuren detailliert beschrieben.
Fig. 1 bis Fig. 3 zeigen unterschiedliche Ansichten eines faltbaren Rollers mit seitlich gegeneinander versetzten Trittbrettern gemäß einem exemplarischen Ausführungsbeispiel der Erfindung.
Fig. 4 bis Fig. 10 veranschaulichen eine Faltlogik eines Rollers gemäß einem exemplarischen Ausführungsbeispiel der Erfindung.
Fig. 11 bis Fig. 13 veranschaulichen die Ausgestaltung von Trittbrettern mit Dämpfungselementen gemäß einem exemplarischen Ausführungsbeispiel der Erfindung, wobei Fig. 11 die Trittbretter in an einen Rahmen hochgeklappten Zustand, Fig. 12 die Trittbretter in einem ausgeklappten unbelasteten Zustand und Fig. 13 die Trittbretter in einem ausgeklappten belasteten Zustand zeigt.
Fig. 14 bis Fig. 16 zeigen eine Lenkkopfhülse sowie einen Steuerkopf mit Anschlaglager eines Rollers gemäß einem exemplarischen Ausführungsbeispiel der Erfindung.
Fig. 17 zeigt eine Lenkkopfhülse eines Rollers gemäß einem anderen exemplarischen Ausführungsbeispiel der Erfindung.
Fig. 18 und Fig. 19 zeigen eine Lenkkopfhülse eines Rollers gemäß noch einem anderen exemplarischen Ausführungsbeispiel der Erfindung.
Fig. 20 bis Fig. 23 zeigen Ausgestaltungen eines Lenkelements eines Rollers gemäß einem exemplarischen Ausführungsbeispiel der Erfindung.
Fig. 24 und Fig. 25 zeigen Ansichten eines Rahmens mit Trittbrettern eines Rollers gemäß einem exemplarischen Ausführungsbeispiel der Erfindung.
Fig. 26 bis Fig. 28 zeigen unterschiedliche Ansichten eines faltbaren Rollers mit seitlich gegeneinander versetzten Trittbrettern gemäß einem anderen exemplarischen Ausführungsbeispiel der Erfindung.
Fig. 29 bis Fig. 31 zeigen unterschiedliche Ansichten eines faltbaren Rollers mit seitlich gegeneinander versetzten Trittbrettern. Dieser Roller gehört nicht zu der beanspruchten Erfindung.
Fig. 32 zeigt eine dreidimensionale Ansicht von windschiefen Faltachsen des Rollers gemäß Fig. 29 bis Fig. 31.
Fig. 33 bis Fig. 36 veranschaulichen eine Faltlogik eines Rollers, der nicht zu der beanspruchten Erfindung gehört.
Fig. 37 zeigt eine Montage eines Trittbrettbereichs an einer Unterseite eines Rahmens mit einer Klappachse, die von einem Endabschnitt des Trittbrettbereichs entfernt ist.
Fig. 38 zeigt eine Montage eines flexiblen und im kraftfreien Zustand gebogenen Trittbrettbereichs an einer Unterseite eines Rahmens.

Gleiche oder ähnliche Komponenten in unterschiedlichen Figuren sind mit gleichen Bezugsziffern versehen.

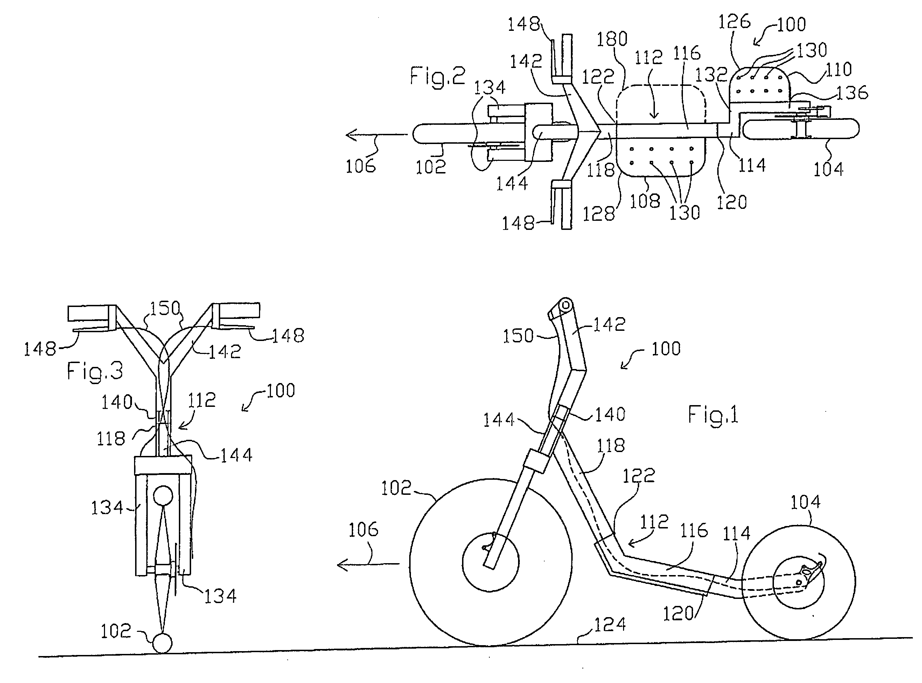

Im Weiteren wird bezugnehmend auf Fig. 1 bis Fig. 3 ein Roller 100 gemäß einem exemplarischen Ausführungsbeispiel der Erfindung in unterschiedlichen Ansichten beschrieben. Fig. 1 zeigt eine Seitenansicht des Rollers 100, Fig. 2 eine Draufsicht und Fig. 3 eine Vorderansicht.

Der Roller 100 ist zum rollenden Fortbewegen eines nicht gezeigten menschlichen Benutzers eingerichtet. Der Roller 100 enthält ein Vorderrad 102 und ein Hinterrad 104, wie in **Fig. 1** zu sehen. Das Vorderrad 102 ist größer ausgeführt als das Hinterrad 104, was im Zusammenspiel mit den anderen Komponenten des Rollers 100 zu einer ergonomischen und sicheren Benutzung des Rollers 100 führt. Die Größe von Vorderrad 102 und Hinterrad 104 sind so gewählt, dass ein guter Kompromiss zwischen Fahrperformance und Packmaß erreicht ist. Ein ausreichend großes Vorderrad 102 führt zu einer guten Fahrperformance, wohingegen ein ausreichend kleines Hinterrad 104 zu einem kleinen Packmaß führt, ohne die Fahrperformance negativ zu beeinflussen. Die beiden Räder 102 und 104 sind entlang einer Längsachse 106, gezeigt in Fig. 1 und **Fig. 2** (in **Fig. 3** auf der Papierebene herauskommend) hintereinander angeordnet. Ein Trittbrett zum Abstützen der Füße des Benutzers enthält einen ersten vorderen Trittbrettbereich 108 und einen zweiten hinteren Trittbrettbereich 110, die insbesondere in Fig. 2 gezeigt sind. Der erste vordere Trittbrettbereich 108 ist größer ausgeführt als der zweite hintere Trittbrettbereich 110. Ferner ist in Fig. 2 ein zusätzlicher Trittbrettbereich 180 angedeutet.

Der erste Trittbrettbereich 108 und der zweite Trittbrettbereich 110 sind auf gegenüberliegenden Seiten der Längsachse 106 des Rollers 100 angeordnet und entlang der Längsrichtung 106 des Rollers 100 gegeneinander versetzt angeordnet. In der gezeigten Rechtshänderkonfiguration ist linksseitig eines Rahmens 112 des Rollers 100 der vordere erste Trittbrettbereich 108 angeordnet, wohingegen der zweite hintere Trittbrettbereich 110 in Längsrichtung 106 rechtsseitig des Rahmens 112 angebracht ist.

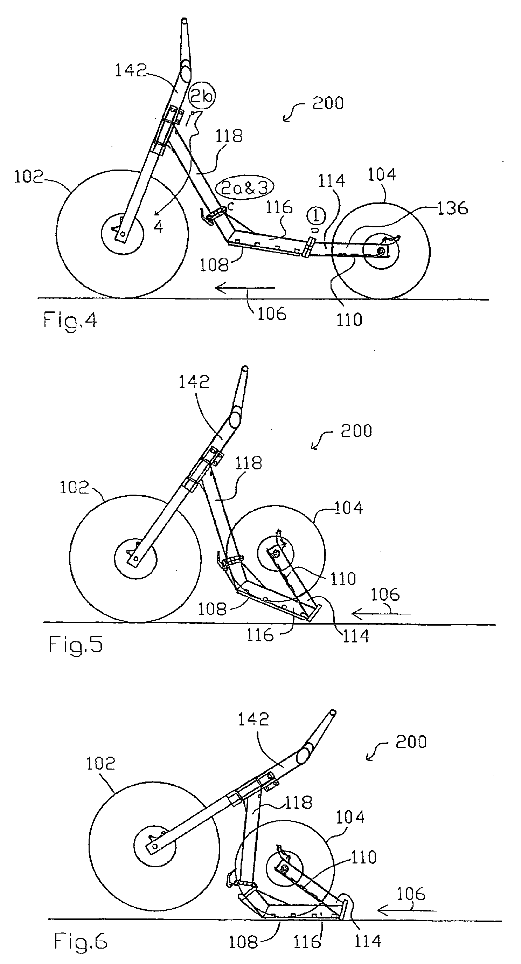

Der Roller 100 ist als zusammenfaltbarer Roller zum rollenden Fortbewegen des Benutzers eingerichtet. Die zwei Räder 102 und 104 sind im entfalteten Zustand des Rollers, vergleiche Fig. 1 bis Fig. 3, entlang der Längsachse 106 des Rollers 100 hintereinander angeordnet. Wie Fig. 1 bis Fig. 3 ferner zu entnehmen ist, sind die beiden Räder 102, 104 an dem Rahmen 112 drehbar montiert. Der Rahmen 112 enthält mehrere gegeneinander faltbare Rahmenabschnitte 114, 116, 118. Diese sind an einer ersten Faltstelle 120 und an einer zweiten Faltstelle 122 zusammenfaltbar, wie unten näher beschrieben wird. Durch die Faltstellen 120, 122 sind zwei Faltachsen definiert, die bezugnehmend auf Fig. 4 bis Fig. 10 genauer beschrieben werden und zueinander windschief verlaufen. Dies ist in Fig. 1 anhand der zueinander winkligen Anordnung der Faltstellen 120, 122 erkennbar.

Wie Fig. 2 zu entnehmen ist, sind der erste Trittbrettbereich 108 und der zweite Trittbrettbereich 102 als voneinander separate, nicht zusammenhängende Komponenten ausgebildet. Beide Trittbrettbereiche 108, 110 sind entlang der Faltachse 106 an den Rahmen 112 einklappbar ausgebildet. Unter Bezugnahme auf Fig. 2 kann somit jeder der an dem Rahmen 112 befestigten Trittbrettbereiche 108, 110 ausgehend von der dort gezeigten Stellung nach oben geklappt werden, so dass die Fußauftrittsflächen der Trittbrettbereiche 108, 110 im hochgeklappten Zustand vertikal zu der Papierebene gemäß Fig. 2 bzw. in der Papierebene gemäß Fig. 1 verlaufen. Durch Betätigung eines Einklappmechanismus durch einen Benutzer können die Trittbrettbereiche 108 bzw. 110 hochgeklappt werden. Es kann in dem ausgeklappten Zustand die Aufhängung der Trittbrettbereiche 108, 110 an dem Rahmen 112 eine gewisse Flexibilität aufweisen, so dass zum Beispiel in einem Szenario, in dem ein Stein einer Unterlage 124 von unten her auf einen Trittbrettbereich 108, 110 einwirkt, der jeweilige Trittbrettbereich 108 bzw. 110 nach oben federnd leicht wegbewegt wird, um solche Stöße abzufangen. Wie mittels abgerundeter Kanten 126 bzw. 128 erkennbar ist, sind die Trittbrettbereiche 108, 110 an einem jeweils vorderen Endabschnitt verjüngt ausgebildet, was einen ebenfalls verbesserten Schutz gegen ein unerwünschtes Einhängen in Steine oder dergleichen sowie gegen Steinschlag und dergleichen ermöglicht.

Ferner sind auf einer Abstützfläche der Trittbrettbereiche 108, 110 zum rutschfreien Abstützen der zwei Füße des Benutzers Spikes 130 in Form von Kegeln mit abgekanteten Spitzen angeordnet. Durch diese Geometrie ist ein ausreichend sicheres Verharren der Füße des Benutzers auf dem jeweiligen Trittbrettbereich 108, 110 gewährleistet, gleichzeitig ist selbst im Falle eines Unfalls eine Verletzung des Benutzers sicher vermieden. Die Trittbrettbereiche 108 bzw. 110 sind an der Unterseite des Rahmens 112 bzw. der zugehörigen Rahmenabschnitte 116 bzw. 114 angeordnet, was einen tiefen Schwerpunkt des Rollers 100 ermöglicht.

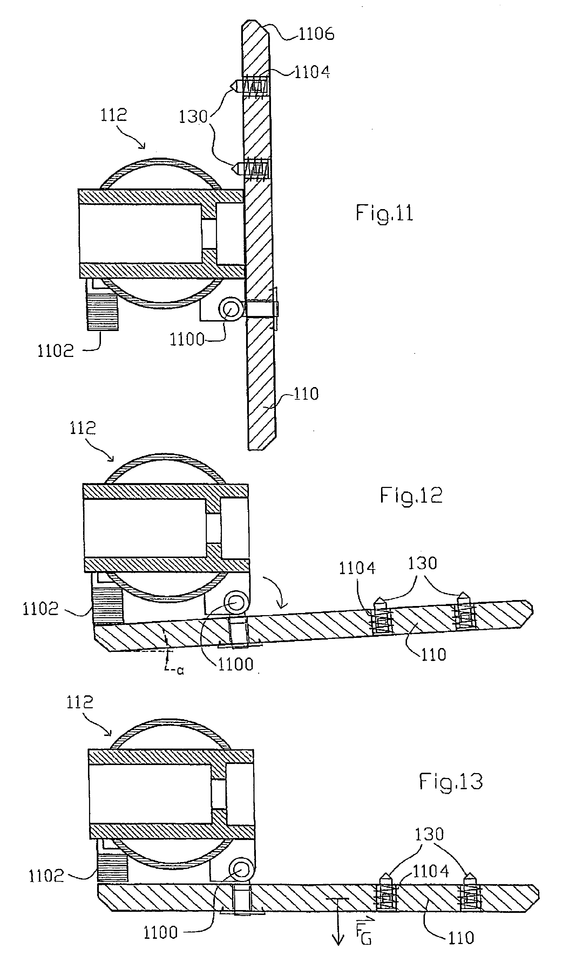

Ferner sind, wie unten bezugnehmend auf Fig. 11 bis Fig. 13 näher beschrieben wird, zwischen den jeweiligen Trittbrettbereichen 108, 110 einerseits und den zugehörigen Rahmenabschnitten 116, 114 andererseits Dämpfungselemente in Form von Gummistopfen vorgesehen, welche auf den Roller 100 bzw. die Trittbrettbereiche 108, 110 einwirkende Stöße abfedern. Dies ist eine kostengünstige und hochwirksame Lösung, die eine wesentlich teurere und aufwendigere Dämpfung an den Rädern 104 bzw. 102 überflüssig macht.

Wie ferner in Fig. 2 zu erkennen ist, hat der Rahmen 112 entlang der Längsachse 106 verlaufende Abschnitte 118, 116 und teilweise 114. Darüber hinaus ist ein Überbrückungsabschnitt 132 vorgesehen, der sich gemäß Fig. 2 vertikal zu den ansonsten entlang der Längsachse 106 erstreckenden Rahmenabschnitten118, 116 und teilweise 114 erstreckt. Dadurch kann eine ausreichende seitliche Versetzung der Trittbrettbereiche 108, 110 erreicht werden, die einer menschlichen Anatomie entspricht.

Ferner ist in Fig. 2 und Fig. 3 eine Federgabel 134 an dem Vorderrad 102 zu sehen. Anstelle einer solchen Zweiarmfedergabel ist es bei einem anderen Ausführungsbeispiel möglich, eine Einarmfedergabel zu verwenden, womit das Packmaß des zusammengefalteten Rollers 100 weiter reduziert wird. Ferner ist insbesondere in Fig. 2 gut zu erkennen, dass das Hinterrad 104 mit einer Einarmschwinge 136 versehen ist, was ebenfalls zu einem sehr geringen Packmaß führt.

Anstelle der Einarmschwinge 136 kann auch eine Zweiarmschwinge vorgesehen sein.

Ein an einer Abnehmstelle 140 (zum Beispiel als Lenkkopfhülse ausgeführt) abnehmbares Lenkelement 142 ist in Fig. 1 bis Fig. 3 ebenfalls gezeigt. Dieses Lenkelement 142 ist an der Abnehmstelle 140 an dem Rahmen 112 abnehmbar anbringbar und weist einen Lenker sowie einen Vorbau des Rollers 100 auf, die das Lenkelement 142 einstückig vereint. Dies stellt eine leichtgewichtige und stabile Konfiguration dar. Wie unten näher beschrieben wird, enthält ein Gabelschaft 144 auch eine Lenkkopfhülse, die an dem Lenkelement 142 anbringbar ist. Ferner zeigt der Roller 100 Bremsbetätigungshebel 148 zum Betätigen einer Vorderbremse und einer Rückbremse mittels Bremsleitungen 150.

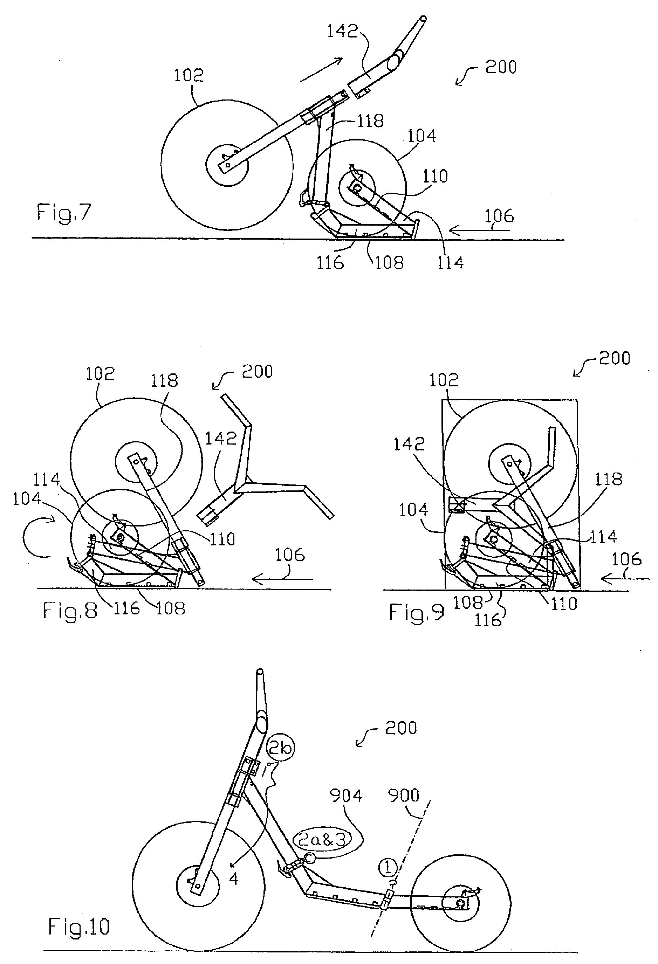

Fig. 4 bis Fig. 9 zeigen einen Einfaltmechanismus eines faltbaren Rollers 200, der dem in Fig. 1 gezeigten Roller 100 weitgehend entspricht. In Fig. 10 ist der Roller 200 nochmals in einem entfalteten Zustand unter Angabe zweier Faltachsen 900, 904 gezeigt, wobei die Bezugszeichen der Einzelkomponenten des Rollers 200 zur besseren Darstellung der Faltlogik in Fig. 10 weggelassen sind.

Wie Punkt 1 in **Fig. 4** und **Fig. 5** anzeigt, kann durch Drehung aus der Längsachse 106 die hintere Einarmschwinge 136 gegen das Unterrohr 116 des Rahmens 112 und gleichzeitig auf das vordere Trittbrett 108 geklappt werden.

Bezugnehmend auf Punkt 2a und Fig. 4 und **Fig. 6** wird durch Lösen des zweiten Klappmechanismus der Vorderbau gegenüber dem Hinterbau des Rollers 200 nach oben gedreht.

Bezugnehmend auf Punkt 2b und Fig. 4 und **Fig. 7** wird das Lenkelement 142 vom Rest des Rollers 200 abgetrennt. Punkt 2b zeigt, wie das Lenkelement 142 des Rollers 200 zum Beispiel durch Lösung von zwei Schnellspannern abgenommen wird.

Bezugnehmend auf Punkt 3 und Fig. 4 und **Fig. 8** wird der Hinterreifen 104 sozusagen in das Auge des Vorderreifens 102 hineingedreht, oder *vice versa.*

Fig. 8 zeigt, wie das Vorderrad 102 nach hinten umgeklappt wird. Der gefaltete Roller 200 steht nun selbständig auf dem vorderen Trittbrett 108 am Boden, so dass das Trittbrett 108 neben der Trittbrettfunktion auch noch die Funktion einer Standunterlage aufweist. Der Roller 200 fällt somit als Paket nicht um, und die Verstauung des zusammengefalteten Rollers 200 ist deutlich vereinfacht.

Das Lenkelement 142 kann an dem Roller 200 verstaut werden. Eine Lenkeröffnung wird hierfür zum Beispiel auf den Schnellspannhebel geschoben, die gegenüberliegende Seite mit einem Gummizug am Vorderreifen 102 befestigt.

**Fig. 9** zeigt das mit dieser Faltlogik erreichbare geringe Packmaß.

**Fig. 10** veranschaulicht die beiden zueinander windschiefen Faltachsen 900 und 904. Faltachse 900 verläuft in der Papierebene und hat bei ebener Unterlage eine horizontale und eine vertikale Komponente. Faltachse 904 verläuft senkrecht zu der Papierebene. Fig. 10 zeigt schematisch (zum Beispiel zu Beginn eines jeweiligen Einzelfaltvorgangs), wie die Faltachsen 900, 904 für den ersten und zweiten Faltausgang zueinander angeordnet sind. Eine Faltachse für die Faltung an der Position 1 ist mit Bezugszeichen 900 schematisiert. Dagegen ist eine Faltachse 904, betreffend die zweite Faltung um die Position 2a und 3, senkrecht zu der Papierebene von Fig. 10 gerichtet.

Zum Entfalten des Rollers 200 kann dieser aus dem in Fig. 9 gezeigten Zustand in den in Fig. 4 gezeigten Zustand gebracht werden, indem die bezugnehmend auf Fig. 4 bis Fig. 9 beschriebene Prozedur rückgängig ausgeführt wird.

Im Weiteren wird bezugnehmend auf Fig. 11 bis Fig. 13 ein Ausklappen eines Trittbrettbereichs 110 eines Rollers gemäß einem Ausführungsbeispiel der Erfindung beschrieben.

**Fig. 11** zeigt, dass der Trittbrettbereich 110 an den Rahmen 112 angelegt ist. Daher ist der Trittbrettbereich 110 vertikal ausgerichtet und somit hochgeklappt. An dem Rahmen 112 ist ein Scharnier 1100 angebracht, das auch mit dem Trittbrettbereich 110 wirkgekoppelt ist. Das Scharnier 1100 ermöglicht ein Drehen des Trittbrettbereichs 110 um den Rahmen 112. Ferner ist an dem Rahmen 112 ein Gummidämpfer 1102 angebracht. Spikes 130 stehen über einer Oberfläche des Trittbrettbereichs 110 hervor und sind als Stahlelemente ausgeführt, die in einem Gewinde 1104 in dem Trittbrettbereich 110 aus Holz eingeschraubt sind. Alternativ zu den Spikes 130 können auch Blechteile mit einer Verzackung oder eine aufgeraute Oberfläche eingesetzt werden. Ein vorderer Endabschnitt 1106 des Trittbrettbereichs 110 ist nach unten hin abgeschrägt, um einen Schutz vor Steinen oder dergleichen beim Betrieb des Rollers zu ermöglichen. Fig. 11 zeigt den Rahmen 112 in einer Schnittansicht an einer Stelle, wo die Hinterradachse des Rollers verläuft.

**Fig. 12** zeigt die Anordnung von Fig. 11, nachdem der Trittbrettbereich 110 mittels des Scharniers 1100 nach unten umgeklappt worden ist (siehe Pfeil). Fig. 12 zeigt die Anordnung in einem unbelasteten oder kraftfreien Zustand, das heißt bevor der Benutzer seinen Fuß auf den Trittbrettbereich 110 aufgesetzt hat. Folglich ist der Trittbrettbereich 110 gegenüber einer horizontalen Stellung um einen kleinen Winkelbereich a versetzt.

**Fig. 13** zeigt die Anordnung von Fig. 12, nachdem der Benutzer seinen Fuß (nicht gezeigt) auf den Trittbrettbereich 110 aufgesetzt hat. Folglich ist der Trittbrettbereich 110 aufgrund der Gewichtsbelastung in einer horizontalen Stellung, das heißt in einem betriebsbereiten Zustand. Dies ist in Fig. 13 durch einen Kraftpfeil F_{G} gezeigt. In diesem Betriebszustand dämpft der Gummidämpfer 1102 eine zwischen dem Rahmen 112 und dem Trittbrettbereich 110 auftretende mechanische Belastung.

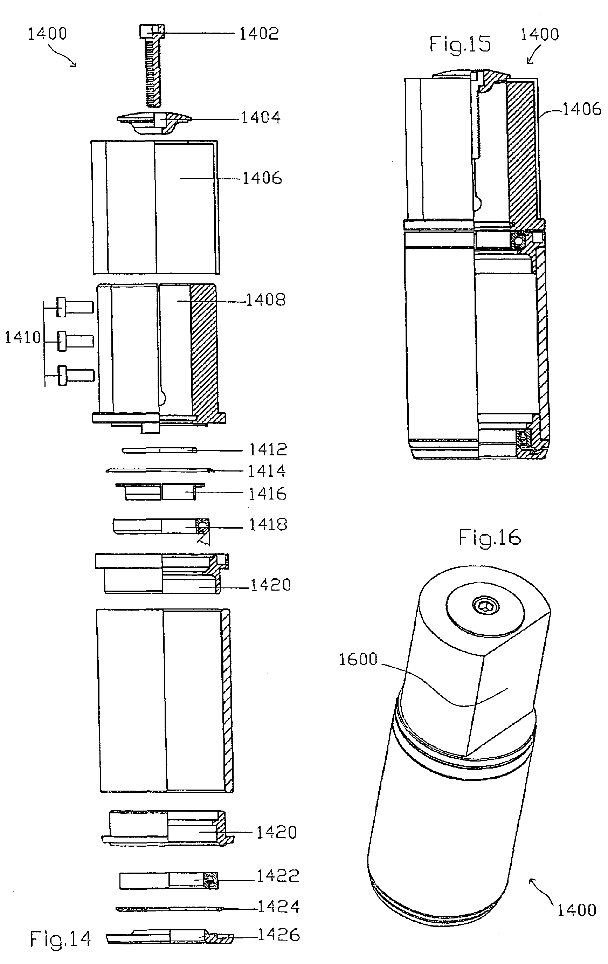

Im Weiteren wird bezugnehmend auf Fig. 14 bis Fig. 16 eine Lenkkopfhülse 1400 gemäß einem Ausführungsbeispiel der Erfindung beschrieben. Diese kann in einem oberen Endabschnitt eines Gabelschafts angeordnet sein, um eine Verbindung zu einem Lenkelement zu erreichen.

**Fig. 14** zeigt den Aufbau der Lenkkopfhülse 1400 in einer Explosionsdarstellung. Eine Schraube 1402, ein Spanndeckel 1404, eine Kunststoffhülse 1406, ein Steuerrohrkopf 1408, drei Schrauben 1410, eine Scheibe 1412, eine Dichtung 1414, ein Zwischenelement 1416, ein Zwischenelement 1418, zwei Lagerschalen 1420, ein Zwischenelement 1422, eine Dichtung 1424 und ein Boden 1426 sind vorgesehen.

**Fig. 15** zeigt nochmals die Lenkkopfhülse 1400 mit der Kunststoffhülse 1406. Sowohl das Lenkelement als auch die Lenkkopfhülse 1400 können größtenteils aus Aluminium hergestellt sein, was beim Betrieb bzw. der Montage oder Demontage zu einer reibenden Bewegung von Aluminium auf Aluminium führen kann. Um daraus resultierende Verschlechterungen zu vermeiden, wird die Kunststoffhülse 1406 als Reibschutz zum Bereitstellen von besseren Reibeigenschaften eingesetzt.

**Fig. 16** zeigt eine dreidimensionale Darstellung der Lenkkopfhülse 1400 mit einer Aussparung 1600 in einem zylindrischen Außenumfang, die als Verdrehschutz gegen ein unerwünschtes Verdrehen des Lenkelements bezüglich des Rahmens dient.

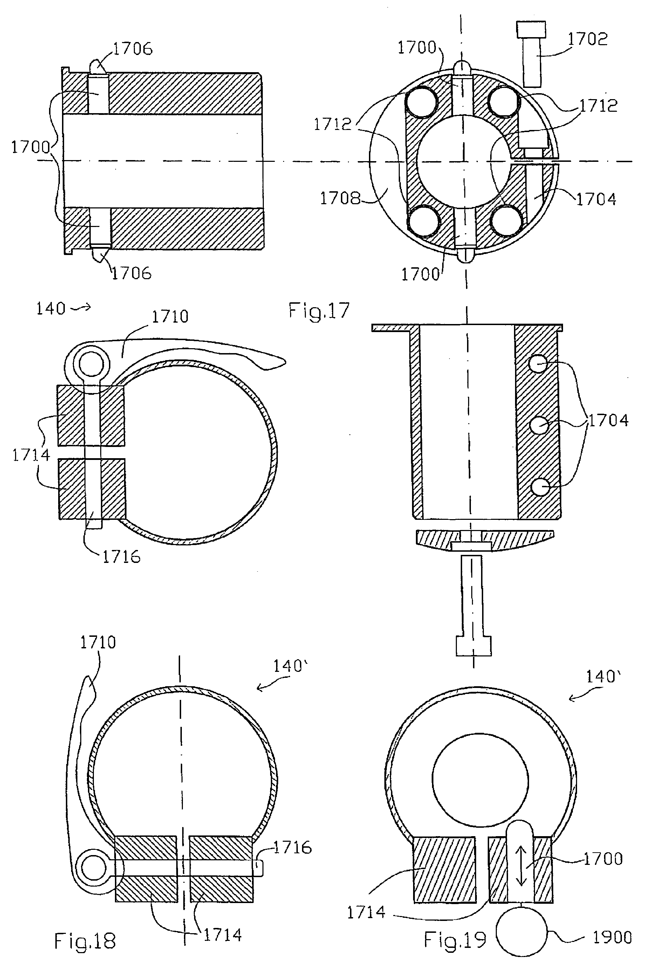

**Fig. 17** zeigt eine andere Lenkkopfhülse 140 gemäß einem Ausführungsbeispiel der Erfindung, die an einem Gabelschaft eines Rollers angebracht sein kann.

Bei der Lenkkopfhülse 140 ist ein Kugelschnapper 1700 vorgesehen, der in ein Lenkelement einschnappt, wenn die Lenkkopfhülse 140 und das Lenkelement miteinander verbunden werden. Der Kugelschnapper 1700 dient als Abziehschutz gegen ein unerwünschtes Abziehen des Lenkelements von dem Gabelschaft. Ein Endabschnitt 1706 des Kugelschnappers 1700 ist schräg abgeflacht, was ein benutzerfreundliches Aufschieben auf das Lenkelement vereinfacht.

Ferner ist an einer Stelle 1708 der zylindrische Kreisumfang abgeflacht oder die runde Ausführung unterbrochen, damit das Lenkelement gegenüber dem Rahmen nicht unerwünscht verdreht werden kann, selbst wenn Schnellspanner 1710 zum Bereitstellen einer Klemmung lose oder gelöst sind. Der Schnellspanner 1710 weist Klemmbacken 1714 auf, durch die ein Bolzen 1716 geführt ist.

Drei Schrauben 1702 können in entsprechende Bohrungen 1704 des Lenkkopfes 140 eingeführt werden, um eine Klemmung zwischen der Lenkkopfhülse 140 und dem Gabelschaft zu erreichen.

Darüber hinaus ist eine Mehrzahl von Kunststoffzylindern 1712 vorgesehen, die umfänglich an der Lenkkopfhülse 140 angebracht sind. Wird die Lenkkopfhülse 140 auf einem Lenkelement befestigt, so werden die hohlen Kunststoffhülsen 1712 leicht nach innen gedrückt und dienen als Reibschutz zwischen dem Lenkelement und der Lenkkopfhülse 140. Anstelle von vier Kunststoffzylindern 1712 kann auch jede beliebige andere Anzahl (eine oder mehrere) vorgesehen werden.

Bei einer Lenkkopfhülse 140' gemäß einem Ausführungsbeispiel der Erfindung gemäß **Fig. 18** und **Fig. 19** schnappt der Kugelschnapper 1700' in die Lenkkopfhülse 140', das heißt die Geometrie ist gegenüber Fig. 17 invertiert. Gemäß Fig. 17 schnappt der Kugelschnapper in das Lenkelement. Eine Griffring 1900 dient als Betätigungselement für einen Benutzer.

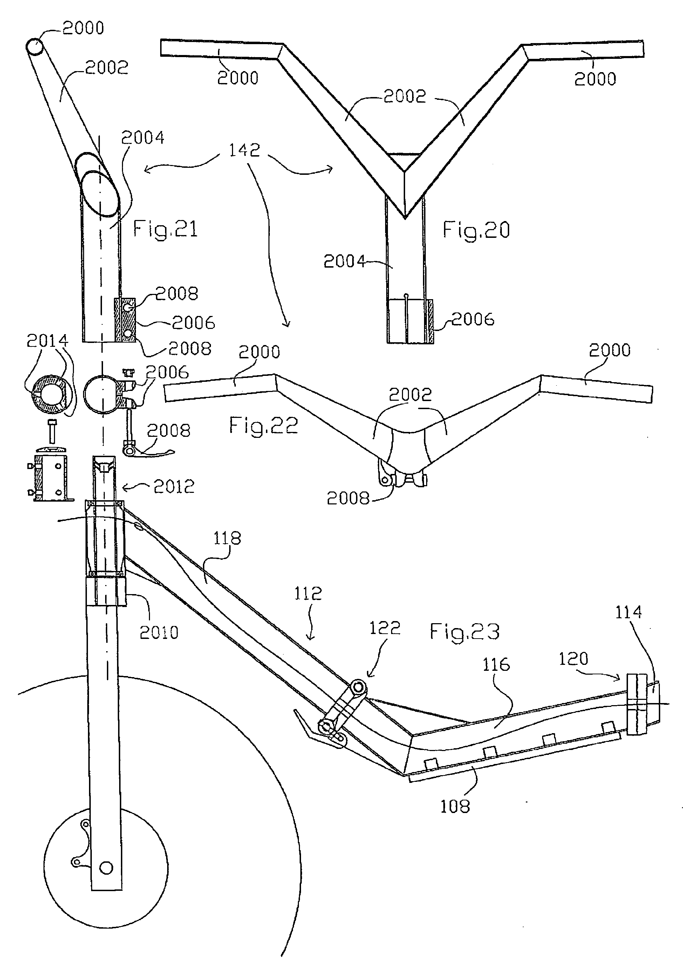

**Fig. 20** bis Fig. 22 zeigen das Lenkelement 142 gemäß einem Ausführungsbeispiel der Erfindung und Komponenten davon. **Fig. 23** zeigt einen lenkerseitigen Endabschnitt des Rahmens 112.

Das Lenkelement 142 weist zwei Lenkgriffe 2000 und einen Vorbau 2002 auf. Lenkgriffe 2000 und Vorbau 2002 sind einstückig ausgeführt. An dem Vorbau 2002 ist eine Verlängerungsstange 2004 als hohles Metallrohr angebracht. **Fig. 21** zeigt, dass der Vorbau 2002 bezüglich der Verlängerungsstange 2004 winkelig angeordnet ist. Dies erlaubt eine bessere Lenkperformance. Die Verlängerungsstange 2004 erlaubt einen Höhensprung von einem Lenkkopf zu dem Vorbau 2000. An einem rahmenseitigen Endabschnitt der Verlängerungsstange 2004 ist ein Klemmelement 2006 mit zwei Bohrungen 2008 zum Aufnehmen von zwei Schnellspannern 2008 vorgesehen, die in **Fig. 22** angedeutet sind.

Ein Gabelschaft 2010 an einem Endabschnitt des Rahmens 112 weist eine Lenkkopfhülse 2012 auf. Eine feste Verbindung zwischen dem Gabelschaft 2010 und der Lenkkopfhülse 2012 kann unter Verwendung von zum Beispiel drei Madenschrauben erreicht werden, die in Bohrungen 2014 eingeführt werden können. Die Madenschrauben ermöglichen eine feste Verbindung zu einem umgebenden Schaft. Eine lösbare Verbindung zwischen dem Lenkelement 142 und der Lenkkopfhülse 2012 kann mittels der zwei Schnellspanner 2008 erreicht werden. Unter einen Schnellspanner 2008 kann ein Hebelelement verstanden werden, das einen außermittigen Drehpunkt hat, so dass durch Umklappen eines Hebels eine mechanische Spannung aufgebaut werden kann, die dann der Befestigung dient. Anders ausgedrückt kann durch Umklappen des Hebels eine Zugspannung auf eine Schraube aufgebaut werden.

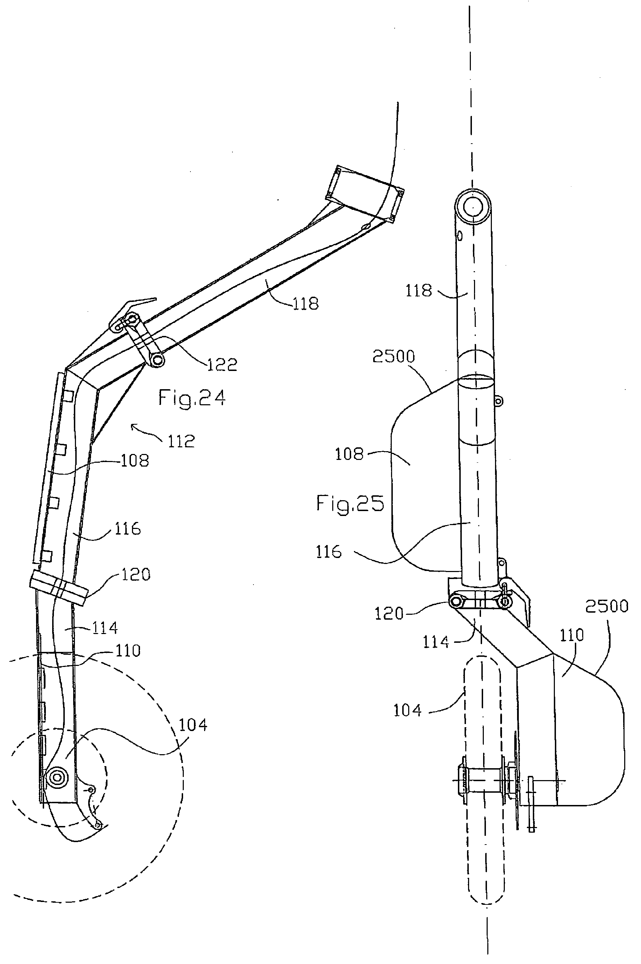

**Fig. 24** und Fig. 25 zeigen eine Ansicht des Rahmens 112 mit daran angebrachten Trittbrettbereichen 108, 110.

Wie **Fig. 25** zu entnehmen ist, ist ein vorderer Endabschnitt der Trittbrettbereiche 108, 110 verjüngend bzw. nach vorne spitz zulaufend ausgebildet, vergleiche Bezugszeichen 2500. Dies dient als Schutz vor Steinen oder dergleichen, die bei Betrieb des Rollers an die Vorderseite der Trittbrettbereiche 108, 110 anstoßen können.

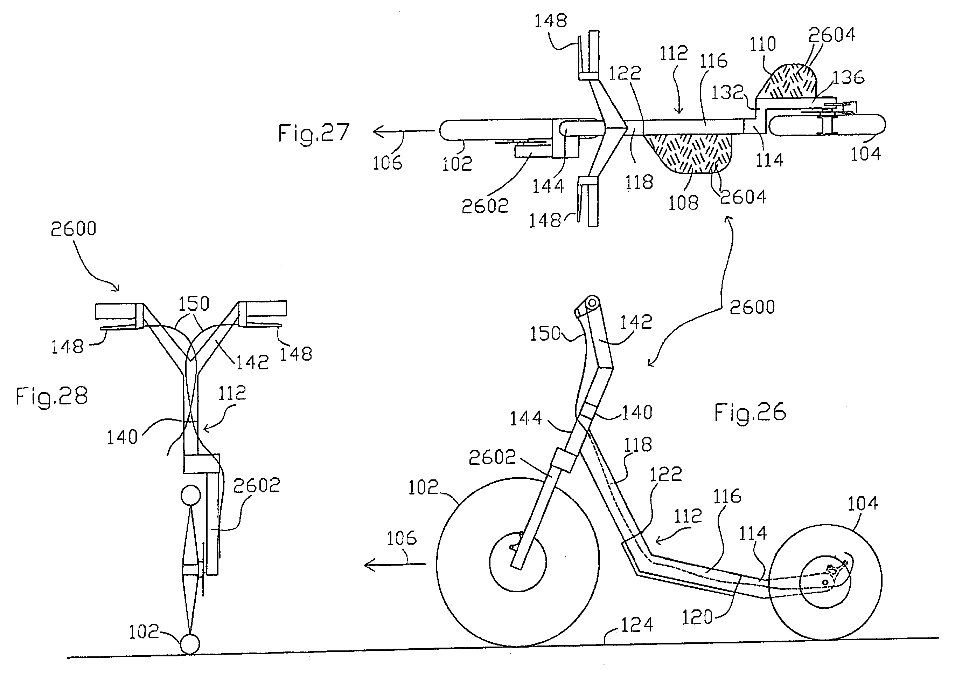

Fig. 26 bis Fig. 28 zeigen einen Roller 2600 gemäß einem anderen Ausführungsbeispiel der Erfindung. **Fig. 26** zeigt eine Seitenansicht des Rollers 2600, **Fig. 27** eine Draufsicht und **Fig. 28** eine Vorderansicht. Der Roller 2600 unterscheidet sich von dem Roller 100 insbesondere dadurch, dass der Roller 2600 eine Einarmfedergabel 2602 aufweist, die nur an einer Seite des Vorderrades 102 verläuft. Dadurch kann ein sehr geringes Packmaß beim Zusammenfalten des Rollers 2600 erreicht werden. Ferner sind bei dem Roller 2600 anstelle von Noppen 130 kreuz und quer verlaufende Rippen 2604 als Verrutschschutz vorgesehen.

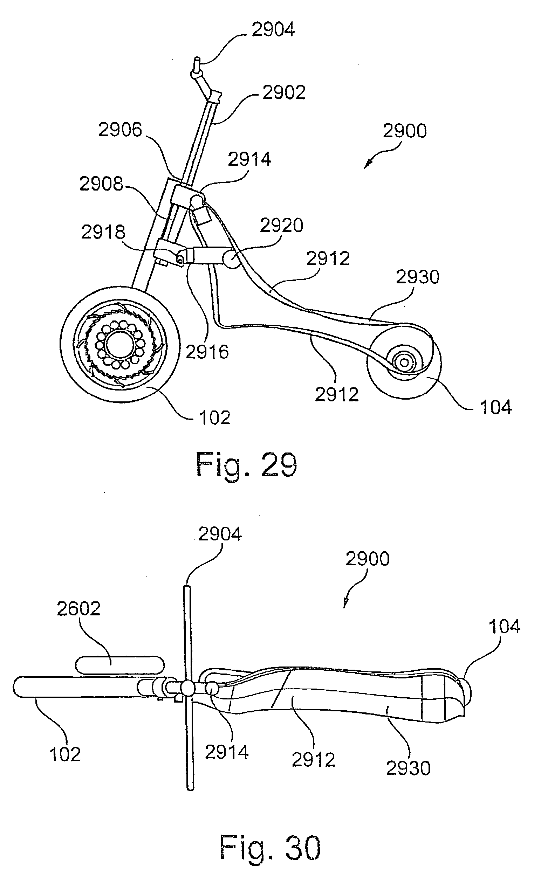

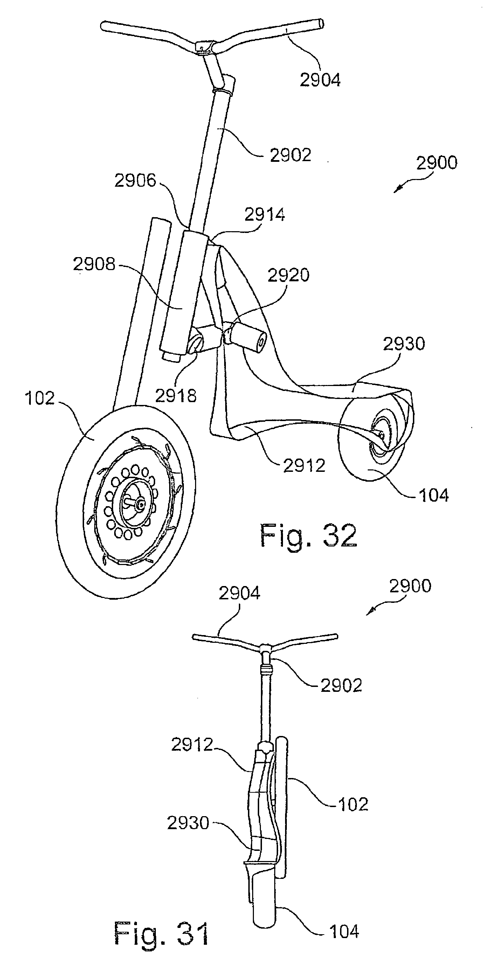

Im Weiteren wird, was dem Verständnis von Ausführungsbeispielen der Erfindung dienlich sein kann, bezugnehmend auf Fig. 29 bis Fig. 32 ein Roller 2900 in unterschiedlichen Ansichten beschrieben. Fig. 29 zeigt eine Seitenansicht des Rollers 2900, Fig. 30 eine Draufsicht und Fig. 31 eine Vorderansicht.

**Fig. 29** zeigt einen zusammenklappbaren und geländetauglichen Roller 2900. Der mehrteilig ausgeführte Klappmechanismus funktioniert wie folgt.
1. Der stufenlos höhenverstellbare Vorbau 2902, an dem der Lenker 2904 befestigt ist, kann durch Lösen der Spannvorrichtung 2906 innerhalb eines Steuerrohres 2908 nach unten geschoben und dann auf der untersten Stufe um bis zu 360° verdreht werden.
2. Der Rahmen 2912 des Rollers 2900 ist mit einer Dreieckskonstruktion am Steuerrohr 2908 befestigt. Eine obere Befestigung 2914 ist mit einer schnell lösbaren Verbindung ausgeführt. Eine untere Strebe 2916 ist beidseitig mit Drehgelenken 2918, 2920 ausgeführt. Um im zusammengeklappten Zustand ein möglichst kleines Packmaß zu erreichen, sind die beiden Drehpunkte 2918, 2920 mit zueinander windschiefen Drehachsen angelegt. Dies bewirkt, dass die im ausgeklappten Zustand in gleicher vertikaler Ebene liegenden Räder 102, 104 im zusammengeklappten Zustand nebeneinander und parallel zueinander liegen. Ein einstückig ausgebildetes Trittbrett 2130 ist in einem hinteren Rahmenabschnitt vorgesehen. Anders ausgedrückt kann das Trittbrett 2130 als Teile des Rahmens 2912 ausgebildet sein.

Bei dem Roller 2900 sind die Bremsscheiben direkt an der Felge angebracht. Dies hat den Vorteil einer geringeren Hitzeentwicklung bei den kleinen Rollerreifen. Bei gleicher Geschwindigkeit hat ein kleineres Rad mehr Umdrehungen, das heißt höhere Bremsscheibentemperaturen. Daher hat diese Maßnahme eine besonders vorteilhafte Wirkung, wenn sie auf das kleinere Rad 104 angewandt wird.

**Fig. 30** zeigt eine Draufsicht des Rollers 2900. **Fig. 31** zeigt eine rückseitige Ansicht des Rollers 2900. **Fig. 32** zeigt eine weitere Ansicht des Rollers 2900, bei welcher auch die Drehgelenke 2918, 2920 erkennbar sind.

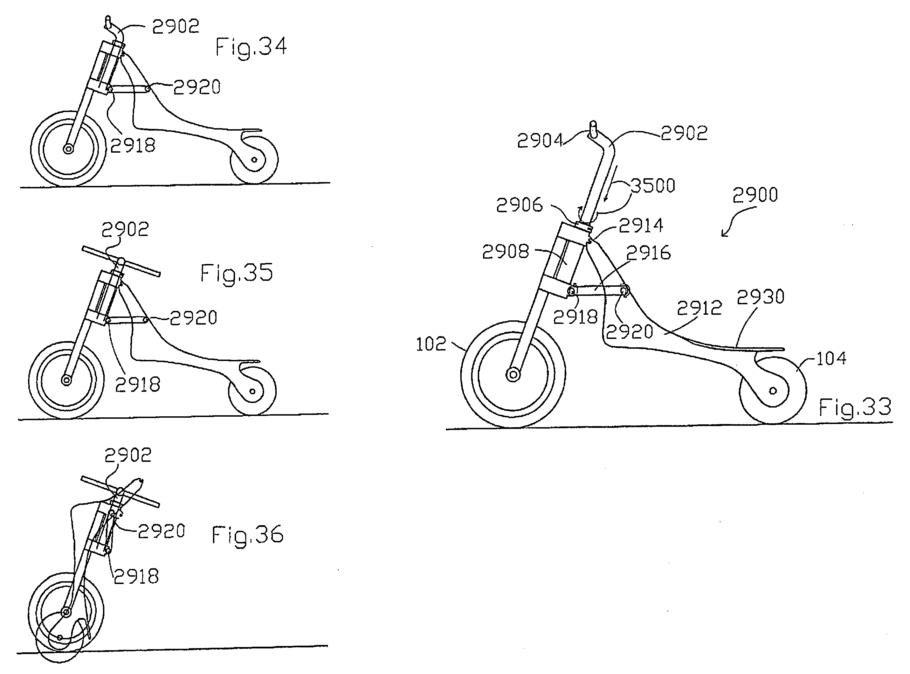

Fig. 33 bis Fig. 36 zeigen einen Einfaltmechanismus des faltbaren Rollers 2900. Hierbei sind die Bezugszeichen der Einzelkomponenten des Rollers 2900 zur besseren Darstellung der Faltlogik weggelassen.

Zunächst wird, wie in **Fig. 33** gezeigt, das Lenkelement zusammengesteckt, was durch Pfeile 3350 angezeigt wird.

**Fig. 34** zeigt den Roller 2900 in einem Zustand, in dem das Lenkelement 2902 eingefahren ist. Um zu dem in **Fig. 35** gezeigten Zustand des Rollers 2900 zu gelangen, ist das Lenkelement 1902 zu drehen, um ein geringes Packmaß zu erreichen. Um zu dem in **Fig. 36** gezeigten Zustand des Rollers 2900 zu gelangen, werden zwei Faltungen mittels der Drehgelenke 2918, 2920 durchgeführt, wobei die zugehörigen Faltachsen windschief zueinander angeordnet sind.

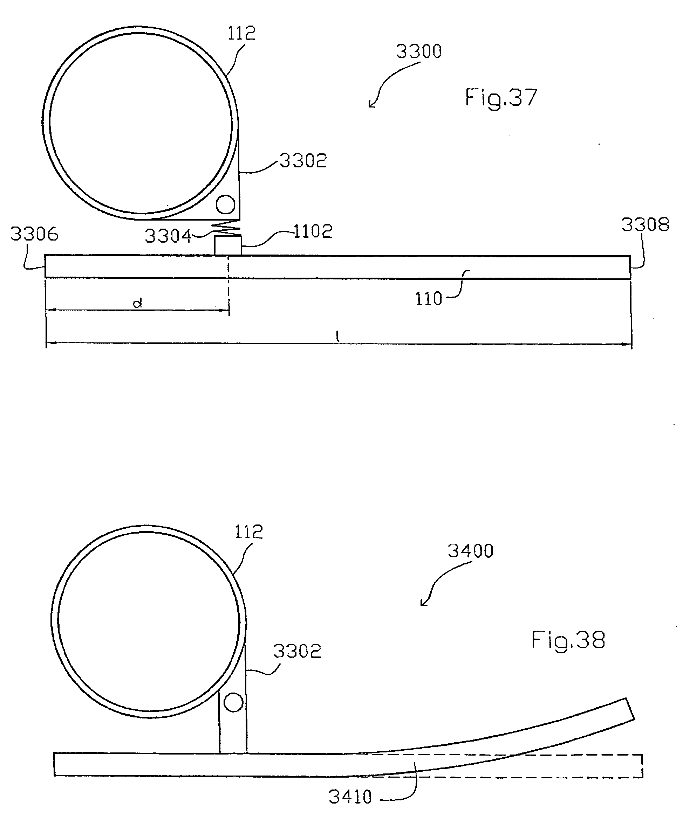

**Fig. 37** zeigt eine Anordnung 330, bei der ein Trittbrettbereich 110 an einer Unterseite eines Rahmens 112 mit einer Klappachse montiert ist, die von einem Endabschnitt 3306 des Trittbrettbereichs 110 um den Abstand d entfernt ist.

An einer seitlichen unteren Stelle des Rahmens 112 ist ein Drehgelenk 3302 angeschweißt. Es ist über eine Feder 3304 mit einer ausreichend großen Federhärte mit einem Gummidämpfelement 1102 gekoppelt, das wiederum auf dem Trittbrettbereich 110 angebracht ist. Indem der Abstand d mindestens 10%, insbesondere mindestens 20%, von der Breite I des Trittbrettbereichs 110 beträgt, ist bei einem Setzen seines Fußes auf den Trittbrettbereich 110 ein auf den Trittbrettbereich 110 wirkendes Drehmoment ausreichend klein, um eine zu starke Abwärtsneigung in Richtung von dem Endabschnitt 3306 zu einem anderen Endabschnitt 3308 des Trittbrettbereichs 110 hin zu vermeiden.

**Fig. 38** zeigt eine Anordnung, bei der ein flexibler und im kraftfreien Zustand gebogener Trittbrettbereich 3410 an einer Unterseite eines Rahmens 112 montiert ist.

Fig. 38 zeigt, dass in einem kraftfreien Zustand der Trittbrettbereich 3410 leicht nach oben gebogen ist. Belastet ein Benutzer mit seinem Körpergewicht den Trittbrettbereich 3410, so wird dieser leicht nach unten gebogen und nimmt dann im Betrieb eine im Wesentlichen horizontale Stellung ein, wie in Fig. 38 mittels einer gestrichelten Darstellung des Trittbrettbereichs 3410 gezeigt ist. In diesem Fall kann optional auch auf Dämpfungselemente 1102 verzichtet werden, da dann die Flexibilität des Trittbrettbereichs 1410 selbst für eine Dämpfung sorgt oder zu einer Dämpfung beiträgt. Außerdem ist es möglich, den Trittbrettbereich 3410 material- und gewichtsparend als dünne Platte auszugestalten.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Faltbarer Roller (100) zum rollenden Fortbewegen eines Benutzers, wobei der Roller (100) aufweist:
mindestens zwei Räder (102, 104), die im entfalteten Zustand des Rollers (100) entlang einer Längsachse (106) des Rollers (100) hintereinander angeordnet sind;
einen Rahmen (112), an dem die mindestens zwei Räder (102, 104) aufgehängt sind;
wobei der Rahmen (112) mehrere gegeneinander faltbare Rahmenabschnitte (114, 116, 118) aufweist,
**dadurch gekennzeichnet, dass** die Rahmenabschnitte (114, 116, 118) gegeneinander zum Zusammenfalten des Rollers (100) entlang mehrerer Faltachsen faltbar sind, wobei zwei der Faltachsen zueinander windschief verlaufen.

2. Roller (100) nach Anspruch 1, wobei der Roller (100) eingerichtet ist, zum Zusammenfalten eine Faltung mit einer zu der Längsachse (106) orthogonalen Faltachse und eine andere Faltung mit bezüglich der Längsachse (106) spitzwinklig angeordneten anderen Faltachse zu vollführen.

3. Roller (100) nach Anspruch 1 oder 2, wobei der Roller (100) eingerichtet ist, zum Zusammenfalten eine erste Faltung eines hinteren Rahmenabschnitts (114) gemeinsam mit einem hinteren der Räder (104) zu vollführen, womit das hintere Rad (104) einem vorderen Rad (102) angenähert und gegenüber einem mittleren Rahmenabschnitt (116) angehoben wird.

4. Roller (100) nach Anspruch 3, wobei der Roller (100) eingerichtet ist, zum Zusammenfalten eine zweite Faltung eines vorderen Rahmenabschnitts (118) gemeinsam mit dem vorderen Rad (102) zu vollführen, womit das vordere Rad (102) dem hinteren Rad (104) weiter angenähert und gegenüber dem mittleren Rahmenabschnitt (116) angehoben wird.

5. Roller (100) nach Anspruch 4, wobei der Roller (100) eingerichtet ist, insbesondere vor der zweiten Faltung, ein Lenkelement (142) von dem vorderen Rahmenabschnitt (118) abzuziehen und, insbesondere nach der zweiten Faltung, das Lenkelement (142) an dem zusammengefalteten Roller (100) zu befestigen.

6. Roller (100) nach einem der Ansprüche 3 bis 5, wobei der mittlere Rahmenabschnitt (116) einen ersten langgestreckten Abschnitt und einen zweiten langgestreckten Abschnitt aufweist, die zueinander abgewinkelt angeordnet sind, oder einen einzigen gebogenen Abschnitt aufweist.

7. Roller (100) nach einem der Ansprüche 1 bis 6, wobei eines der zwei Räder (102, 104), insbesondere ein vorderes (102) der mindestens zwei Räder (102, 104), mittels einer Einarmgabel, insbesondere mittels einer Einarmfedergabel (2602), aufgehängt ist.

8. Roller (100) nach einem der Ansprüche 1 bis 7, wobei eines der zwei Räder (102, 104), insbesondere ein hinteres (104) der mindestens zwei Räder (102, 104), mit einer Einarmschwinge (136) ausgestattet ist.

9. Roller (100) nach einem der Ansprüche 1 bis 8, ferner aufweisend ein Lenkelement (142), das abnehmbar oder abklappbar an dem Rahmen (112) anbringbar ist.

10. Roller (100) nach Anspruch 9, wobei das Lenkelement (142) Lenkgriffe (2000) und einen Vorbau (2002) einstückig vereint.

11. Roller (100) nach Anspruch 9 oder 10, wobei ein Gabelschaft (144) eine Lenkkopfhülse (140) aufweist, wobei das Lenkelement (142) mittels der Lenkkopfhülse (140) an dem Gabelschaft (144) klemmend anbringbar ist.

12. Roller (100) nach Anspruch 11, wobei zum klemmenden Anbringen mindestens ein Schnellspanner (1710) an dem Lenkelement (142) angebracht ist, insbesondere mindestens zwei Schnellspanner (1710) angebracht sind.

13. Roller (100) nach Anspruch 12, wobei die zwei Schnellspanner (1710) mittels einer Seilverbindung gekoppelt sind.

14. Roller (100) nach einem der Ansprüche 11 bis 13, aufweisend einen Kugelschnapper (1700), der zum Einschnappen bei Anbringen des Lenkelements (142) an der Lenkkopfhülse (140) eingerichtet ist.

15. Roller (100) nach einem der Ansprüche 1 bis 14, aufweisend ein Trittbrett, das zum Abstützen zweier Füße des Benutzers eingerichtet ist, wobei das Trittbrett einen ersten Trittbrettbereich (108) und einen zweiten Trittbrettbereich (110) aufweist, wobei der erste Trittbrettbereich (108) und der zweite Trittbrettbereich (110) auf gegenüberliegenden Seiten der Längsachse (106) des Rollers (100) angeordnet und in der Längsrichtung des Rollers (100) gegeneinander versetzt angeordnet sind, wobei einer der Trittbrettbereiche (108, 110) eingerichtet ist, in einem zusammengefalteten Zustand des Rollers (100) als im Wesentlichen ebene Untergrundauflage auf einem Untergrund aufzuliegen und ein Gewicht des zusammengefalteten Rollers (100) zu tragen.

## Claims

1. Foldable scooter (100) for a rolling motion of a user, wherein the scooter (100) comprises:
at least two wheels (102, 104) which are arranged in series along a longitudinal axis (106) of the scooter (100) in the unfolded state of the scooter (100);
a frame (112) on which the at least two wheels (102, 104) are mounted;
wherein the frame (112) comprises multiple frame sections (114, 116, 118) foldable against each other,
**characterized in that** the frame sections (114, 116, 118) are foldable against each other along multiple folding axes for folding the scooter (100), wherein two of the folding axes are skewed to each other.

2. Scooter (100) according to claim 1, wherein the scooter (100) is adapted to perform a folding with a folding axis orthogonal to the longitudinal axis (106) and another folding with another folding axis acute-angled respective to the longitudinal axis (106) for folding.

3. Scooter (100) according to claim 1 or claim 2, wherein the scooter (100) is adapted to perform a first folding of a rear frame section (114) together with a rear one of the wheels (104) for folding, whereby the rear wheel (104) is approached to a front wheel (102) and is raised compared to a central frame section (116).

4. Scooter (100) according to claim 3, wherein the scooter (100) is adapted to perform a second folding of a front frame section (118) together with the front wheel (102) for folding, whereby the front wheel (102) is further approached to the rear wheel (104) and is raised compared to the central frame section (116).

5. Scooter (100) according to claim 4, wherein the scooter (100) is adapted to detach a steering element (142) from the front frame section (118), particularly before the second folding, and to attach the steering element (142) to the folded scooter (100), particularly after the second folding.

6. Scooter (100) according to any one of the claims 3 to 5, wherein the central frame section (116) comprises a first elongated section and a second elongated section, which are arranged angled to each other, or comprises a single bent section.

7. Scooter (100) according to any one of the claims 1 to 6, wherein one of the two wheels (102, 104), particularly a front one (102) of the at least two wheels (102, 104), is mounted by a one-armed fork, particularly by a one-armed suspension fork (2602).

8. Scooter (100) according to any one of the claims 1 to 7, wherein one of the two wheels (102, 104), particularly a rear one (104) of the at least two wheels, is equipped with a single-sided swing arm (136).

9. Scooter (100) according to any one of the claims 1 to 8, further comprising a steering element (142) which is attachable to the frame (112) to be detachable or foldable.

10. Scooter (100) according to claim 9, wherein the steering element (142) integrally combines steering grips (2000) and a stem (2002).

11. Scooter (100) according to claim 9 or 10, wherein a steerer tube (144) comprises a steering head sleeve (140), wherein the steering element (142) is clampingly attachable to the steerer tube (144) by the steering head sleeve (140).

12. Scooter (100) according to claim 11, wherein for clampingly attaching at least one quick acting clamp (1710) is attached to the steering element (142), particularly at least two quick acting clamps (1710) are attached.

13. Scooter (100) according to claim 12, wherein the two quick acting clamps (1710) are coupled by a rope connection.

14. Scooter (100) according to any one of the claims 11 to 13, comprising a ball catch (1700) which is adapted for snapping when attaching the steering element (142) at the steering head sleeve (140).

15. Scooter (100) according to any one of the claims 1 to 14, comprising a footboard which is adapted for supporting two feet of the user, wherein the footboard comprises a first footboard area (108) and a second footboard area (110), wherein the first footboard area (108) and the second footboard area (110) are arranged on opposite sides of the longitudinal axis (106) of the scooter (100) and are arranged shifted to each other in the longitudinal direction of the scooter (100), wherein one of the footboard areas (108, 110) is adapted to bear on a ground as a substantially flat ground bearing in a folded state of the scooter (100) and to carry a weight of the folded scooter (100).

## Revendications

1. Trottinette pliable (100) pour le déplacement roulant d'un utilisateur, la trottinette (100) présentant :
au moins deux roues (102, 104) qui sont disposées l'une derrière l'autre dans l'état déplié de la trottinette (100) le long d'un axe longitudinal (106) de la trottinette (100) ;
un cadre (112) auquel les au moins deux roues (102, 104) sont suspendues ;
le cadre (112) présentant plusieurs sections de cadre (114, 116, 118) pliables les unes contre les autres,
**caractérisée en ce que** les sections de cadre (114, 116, 118) sont pliables les unes contre les autres pour le repliage de la trottinette (100) le long de plusieurs axes de pliage, deux des axes de pliage s'étendant de manière inclinée l'un par rapport à l'autre.

2. Trottinette (100) selon la revendication 1, la trottinette (100) étant conçue pour réaliser pour le repliage, un pliage avec un axe de pliage orthogonal à l'axe longitudinal (106) et un autre pliage avec un autre axe de pliage disposé à angle aigu par rapport à l'axe longitudinal (106).

3. Trottinette (100) selon la revendication 1 ou 2, la trottinette (100) étant conçue pour réaliser pour le repliage un premier pliage d'une section de cadre arrière (114) conjointement avec une roue arrière des roues (104), avec quoi la roue arrière (104) est approchée d'une roue avant (102) et est relevée par rapport à une section de cadre médiane (116).

4. Trottinette (100) selon la revendication 3, la trottinette (100) étant conçue pour réaliser pour le repliage un second pliage d'une section de cadre avant (118) conjointement avec la roue avant (102), avec quoi la roue avant (102) est encore approchée de la roue arrière (104) et est relevée par rapport à une section de cadre médiane (116).

5. Trottinette (100) selon la revendication 4, la trottinette (100) étant conçue pour retirer en particulier avant le second pliage, un élément de direction (142) de la section de cadre avant (118) et en particulier de fixer l'élément de direction (142) après le second pliage sur la trottinette repliée (100).

6. Trottinette (100) selon l'une quelconque des revendications 3 à 5, la section de cadre (116) médiane présentant une première section étirée en longueur et une seconde section étirée en longueur qui sont disposées coudées ou présentant une seule section pliée.

7. Trottinette (100) selon l'une quelconque des revendications 1 à 6, l'une des deux roues (102, 104), en particulier une roue avant (102) des au moins deux roues (102, 104) étant suspendue à l'aide d'une fourche à un bras, en particulier à l'aide d'une fourche à ressort à un bras (2602).

8. Trottinette (100) selon l'une quelconque des revendications 1 à 7, l'une des deux roues (102, 104), en particulier une roue arrière (104) des au moins deux roues (102, 104) étant équipée d'une bielle à un bras (136).

9. Trottinette (100) selon l'une quelconque des revendications 1 à 8, présentant de plus un élément de direction (142) qui peut être monté de manière amovible ou rabattable sur le cadre (112).

10. Trottinette (100) selon la revendication 9, l'élément de direction (142) réunissant d'un seul tenant des poignées de direction (2000) et un avant-corps (2002).

11. Trottinette (100) selon la revendication 9 ou 10, un tube de fourche (144) présentant une douille de tête de direction (140), l'élément de direction (142) pouvant être monté par serrage à l'aide de la douille de tête de direction (140) sur le tube de fourche (144).

12. Trottinette (100) selon la revendication 11, au moins un dispositif de serrage rapide (1710) étant monté sur l'élément de direction (142) pour le montage par serrage, en particulier au moins deux dispositifs de serrage rapide (1710) étant montés.

13. Trottinette (100) selon la revendication 12, les deux dispositifs de serrage rapide (1710) étant couplés à l'aide d'une liaison par câblage.

14. Trottinette (100) selon l'une quelconque des revendications 11 à 13, présentant un loqueteau à billes (1700) qui est conçu pour l'encliquetage lors du montage de l'élément de direction (142) sur la douille de tête de direction (140).

15. Trottinette (100) selon l'une quelconque des revendications 1 à 14, présentant un marchepied qui est conçu pour l'appui de deux pieds de l'utilisateur, le marchepied présentant une première zone de marchepied (108) et une seconde zone de marchepied (110), la première zone de marchepied (108) et la seconde zone de marchepied (110) étant disposées sur des côtés opposés de l'axe longitudinal (106) de la trottinette (100) et étant disposées en déport l'une de l'autre dans le sens longitudinal de la trottinette (100), l'une des zones de marchepied (108, 110) étant conçue afin de reposer dans un état replié de la trottinette (100) comme un appui de fond sensiblement plan sur un fond et de porter un poids de la trottinette (100) repliée.
